# EUROPEAN PATENT APPLICATION

(11) **EP 1 720 153 A1**
(43) Veröffentlichungstag der Anmeldung: **08.11.2006**
(21) Anmeldenummer: 05710118.0
(22) Anmeldetag: 10.02.2005
(51) Int. Cl.: G10K 11/16

(54) **DURCHGANGS-SCHALLDÄMPFER**

(30) Priorität: 13.02.2004 JP 2004036960; 30.04.2004 JP 2004136646
(71) Anmelder: Japan Science and Technology Agency, Kawaguchi-shi, Saitama 332-0012 (JP)
(72) Erfinder: FUJIWARA, Kyoji, Chikushi-gun Fuk, uoka 8111221 (JP)
(74) Vertreter: Jeck, Anton
(86) Internationale Anmeldenummer: PCT/JP2005/002066
(87) Internationale Veröffentlichungsnummer: WO 2005/078702

(57) **Zusammenfassung**

Die gegenwärtige Erfindung stellt einen Schalldämpfer für einen Kanal zur Verfügung, der einen größeren Installationsbereich in einem Kanal aufweist, ohne jedoch dabei das Dämpfungsvermögen zu vermindern. Gemäß der Erfindung sind auf einer Fläche der Kanalinnenwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet, um diese Schallwelle in Längsrichtung des Kanals zu dämpfen. Genauer gesagt wird das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist. Darüber hinaus ist das akustische Rohr an seinem offenen Ende durch eine Folie verschlossen.

## Beschreibung

Die gegenwärtige Erfindung betrifft einen Schalldämpfer für einen Kanal, wobei der Schalldämpfer in einem Kanal, in dem Gas oder Flüssigkeit fließt, befestigt ist, um Geräusche, die durch den Kanal verbreitet werden, zu vermindern.

Ein Kanal, der es erlaubt, dass durch ihn Gas und Flüssigkeit laufen, verbreitet nicht nur diese Medien, sondern auch Geräusche. Daher ist es auch bekannt, in einem Kanal einen Schalldämpfer anzuordnen, um die Verbreitung solcher Geräusche in diesem Kanal zu vermindern.

Als typisches Beispiel entstand in einer Industrieanlage oder in einem Gebäude, das große Geräusche erzeugt, eine Beeinträchtigung dadurch, dass sich diese Geräusche auf leichte Weise durch die Kanäle bzw. Rohre verbreiteten. Um diese Geräusche im Allgemeinen zu vermindern, wurde dafür ein Kanalschalldämpfer benutzt, der diese Geräusche dämpft, indem er die akustische Energie der Geräusche durch die Anwendung eines schallabsorbierenden Glieds, wie beispielsweise Glaswolle, absorbiert.

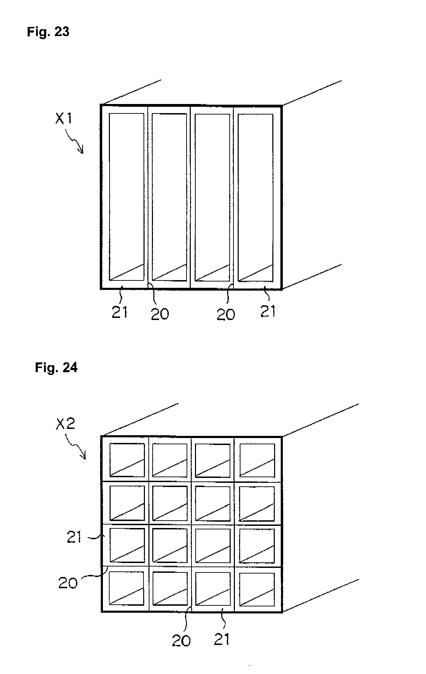

Einer der Kanalschalldämpfer, der ein schallabsorbierendes Glied benutzt und in der beigefügten Fig. 23 gezeigt ist, ist ein Teilertyp-Kanalschalldämpfer X1, der das Innere des Kanals D mit Hilfe von Trennwänden 20, die aus Metallplatten oder Ähnlichem hergestellt sind, in vertikaler Richtung oder Querrichtung fein aufteilt und bei dem das schallabsorbierende Glied 21 auf den Trennwandflächen 20 oder Kanalinnenwandflächen D befestigt ist, während in Fig. 24 ein Kammer-Kanalschalldämpfer X2 dargestellt ist, der das Innere des Kanals D in Kammern fein aufteilt, die kleiner als beim Teilertyp-Kanalschalldämpfer X1 sind.

In diesen Kanalschalldämpfern X1. X2 ist der Anordnungsbereich des schallabsorbierenden Glieds 21 durch das Aufteilen des Inneren des Kanals D durch Trennwände 20 vergrößert, so dass sich der Betrag der Dämpfung des Geräusches erhöht. Allerdings weist das oben genannte, aus Glaswolle oder Ähnlichem gebildete, schallabsorbierende Glied 21 nur ein schwaches Dämpfungsvermögen im Niederfrequenzband auf, und daher ist es nötig, die Verbreitung von Geräuschen im Niederfrequenzband zu verhindern.

Dementsprechend hat der Erfinder der vorliegenden Erfindung einen Kanalschalldämpfer vorgeschlagen, der im japanischen Patent Nr. 2003-216159 (Patentdokument 1) offengelegt ist, in dem durch die Anordnung eines akustisch weichen Gebiets, in dem der Schalldruck an der Innenwandfläche annähernd Null ist, die Verbreitung von Lärm im Niederfrequenzband verhindert werden kann. Das akustisch weiche Gebiet ist derart ausgebildet, dass eine Vielzahl von akustischen Rohren mit einer Länge, die sich von einem an einer Kanalinnenwandfläche angeordneten, offenen Rohrende zu einem geschlossenen Rohrende erstreckt, das auf ein Viertel der Wellenlänge einer Schallwelle festgelegt ist, die zum Geräusch wird (nachstehend bezeichnet als akustische Rohre mit einer Länge, die ein Viertel der Wellenlänge beträgt), parallel zueinander über mehr als annähernd eine halbe Wellenlänge einer Schallwelle oder mehr angeordnet sind, die in Längsrichtung des Kanals zum Geräusch geworden ist.

Allerdings ist es im Hinblick auf den herkömmlichen Kanalschalldämpfer, der akustische Rohre mit einer Länge, die ein Viertel der Wellenlänge beträgt, verwendet, notwendig, dass das akustisch weiche Gebiet kontinuierlich über mehr als annähernd eine halbe Wellenlänge einer Schallwelle, die zum Geräusch geworden ist, an der Kanalinnenwandfläche angeordnet wird. Demzufolge gibt es auch eine Möglichkeit, dass es in einem vorbestimmten Bereich, in dem das akustisch weiche Gebiet gebildet ist, unmöglich ist, den Kanal anders zu errichten, und daher ist die Einrichtung des Kanals oder der Bereich, in dem der Kanalschalldämpfer angeordnet werden kann, beschränkt.

Ferner kann bei einem Kanalschalldämpfer, der akustische Rohre mit einer Länge, die ein Viertel der Wellenlänge beträgt, verwendet, ein Dämpfungseffekt nur dann erreicht werden, wenn die Öffnungsweite des Kanals eine halbe Wellenlänge oder weniger einer Schallwelle beträgt, die zum Geräusch wird, und deshalb ist es, wenn die Öffnungsweite des Kanals eine halbe Wellenlänge einer zum Geräusch gewordenen Schallwelle überschreitet, notwendig, das Innere des Kanals durch Trennwände zu unterteilen, wie im Falle des Kammer-Schalldämpfers oder des Teilertyp-Kanalschalldämpfers. In diesem Fall entsteht eine Beeinträchtigung dadurch, dass, wenn die akustischen Rohre mit einer Länge, die ein Viertel der Wellenlänge beträgt, an den Trennwänden angeordnet sind, die Trennwände dicker werden und so das Verhältnis der Öffnungen zur Kanalquerschnittsfläche verringert wird.

Wenn beispielsweise die akustischen Rohre mit einer Länge, die ein Viertel der Wellenlänge beträgt, auf der Stelle des Kammertyp-Kanalschalldämpfer X2 angeordnet sind, wie in Fig. 24 dargestellt ist, in der Annahme, dass eine Öffnungsweite "t" einer Kammer λ/2 eines Höchstwerts ist (das ist eine Wellenlänge einer Schallwelle), sind die akustischen Rohre mit einer Länge von λ/4 entlang vier Außenflächen der Kammer angeordnet, und deshalb wird der gesamte Querschnittsbereich 2λ×2λ=4λ², wobei ein Bereich, der ein Hindurchströmen einer Luftströmung ermöglicht, zu λ/2×λ/2×4=λ² wird. Das heißt, das Öffnungs-Querschnitts-Verhältnis beträgt ein Viertel.

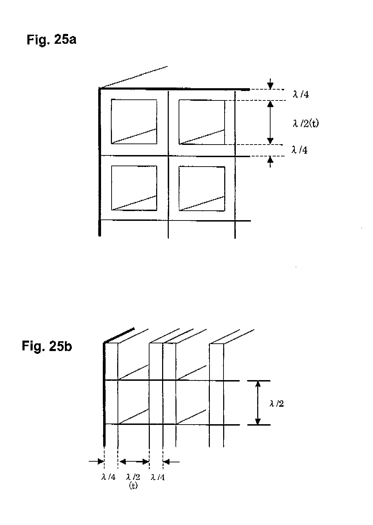

Auch wenn die akustischen Rohre mit einer Länge, die ein Viertel einer Wellenlänge beträgt, an nur zwei gegenüberliegenden Flächen am äußeren Rand der Kammer angeordnet sind, wie beispielsweise in Fig. 25(b) dargestellt ist, beträgt ferner das Öffnungs-Querschnitts-Verhäitnis einhalb.

Wenn die akustischen Rohre mit einer Länge, die ein Viertel einer Wellenlänge beträgt, an die Trennwände, die das Innere des Kanals aufteilen, auf diese Weise angebracht werden, wird mehr als die Hälfte der Kanalquerschnittsfläche vom strukturellen Körper besetzt, und deshalb wird die Luftdurchlässigkeit des Kanals gesenkt, was wiederum zu der Möglichkeit führt, dass die akustischen Rohre mit einer Länge, die ein Viertel einer Wellenlänge beträgt, in der aktuellen Praxis verwendet werden können.
(Patent Dokument 1: offengelegte, japanische Patentanmeldung Nr. 2003-216159)

Bei der vorliegenden Erfindung nach Anspruch 1 sind auf einer Fläche der Kanalinnenwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet, um diese Schallwelle in Längsrichtung des Kanals zu dämpfen.

Gemäß der vorliegenden Erfindung, wie sie in Anspruch 2 beschrieben wird, ist der Kanal durch Trennwände derart unterteilt, dass eine Öffnungsweite eine halbe Wellenlänge oder weniger einer zu dämpfenden Schallwelle beträgt; auf beiden Seitenflächen der Trennwand sind ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet, um diese Schallwelle in Längsrichtung des Kanals zu dämpfen.

Ferner wird gemäß der vorliegenden Erfindung, wie sie in Anspruch 3 nach Anspruch 1 oder 2 beschrieben wird, das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist.

Gemäß der vorliegenden Erfindung, wie sie in Anspruch 4 nach Anspruch 3 beschrieben wird, ist das akustische Rohr an seinem offenen Ende durch eine Folie verschlossen.

Gemäß der vorliegenden Erfindung, wie sie in Anspruch 5 nach Anspruch 3 oder 4 beschrieben wird, ist das akustisch weiche Gebiet dadurch gebildet, dass das offene Rohrende auf der einen Wandfläche der Trennwand angeordnet ist, und das akustisch nicht weiche Gebiet ist dadurch gebildet, dass das geschlossene Rohrende auf der anderen Wandfläche der Trennwand angeordnet ist.

Gemäß der vorliegenden Erfindung, wie sie in Anspruch 6 nach einem der Ansprüche 1 bis 5 beschrieben wird, ist das akustisch nicht weiche Gebiet durch ein schallabsorbierendes Glied gebildet, das den Schalldruck vermindert.

Gemäß der vorliegenden Erfindung, wie sie in Anspruch 7 beschrieben wird, ist ein erstes Dämpfungsmittel auf dem einen Paar aus lnnenwandflächen von zwei Paaren sich gegenüberliegender Innenwandflächen eines Kanals mit rechteckförmigem Querschnitt befestigt; ein zweites Dämpfungsmittel, das eine von der des ersten Dämpfungsmittels unterschiedliche Dämpfungseigenschaft aufweist, ist auf dem anderen Paar aus Innenwandflächen befestigt, und das erste Dämpfungsmittel ist derart ausgebildet, dass ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle oder mehr angeordnet sind, um diese Schallwelle in Längsrichtung des Kanals zu dämpfen.

Gemäß der vorliegenden Erfindung, wie sie in Anspruch 8 beschrieben wird, ist der Kanal durch Trennwände derart unterteilt, dass eine Vielzahl von kleinen Kanälen mit rechteckförmigem Querschnitt derart gebildet werden, dass eine Öffnungsweite eine halbe Wellenlänge oder weniger einer zu dämpfenden Schallwelle beträgt; ein erstes Dämpfungsmittel ist auf dem einen Paar aus Innenwandflächen von zwei Paaren sich gegenüberliegender Innenwandflächen eines kleinen Kanals befestigt; ein zweites Dämpfungsmittel, das eine von der des ersten Dämpfungsmittels unterschiedliche Dämpfungseigenschaft aufweist, ist auf dem anderen Paar aus Innenwandflächen befestigt, und das erste Dämpfungsmittel ist derart ausgebildet, dass ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle oder mehr angeordnet sind, um diese Schallwelle in Längsrichtung des Kanals zu dämpfen.

Gemäß der vorliegenden Erfindung, wie sie in Anspruch 9 nach Anspruch 7 oder 8 beschrieben wird, wird das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist.

Gemäß der vorliegenden Erfindung, wie sie in Anspruch 10 nach Anspruch 9 beschrieben wird, ist das akustische Rohr an seinem offenen Ende durch eine Folie verschlossen.

Gemäß der vorliegenden Erfindung, wie sie in Anspruch 11 nach Anspruch 9 oder 10 beschrieben wird, ist das akustisch weiche Gebiet dadurch gebildet, dass das offene Rohrende auf der einen Wandfläche der Trennwand angeordnet ist, und das akustisch nicht weiche Gebiet ist dadurch gebildet, dass das geschlossene Rohrende auf der anderen Wandfläche der Trennwand angeordnet ist.

Gemäß der vorliegenden Erfindung, wie sie in Anspruch 12 nach einem der Ansprüche 7 bis 11 beschrieben wird, ist das zweite Dämpfungsmittel derart ausgebildet, dass ein schallabsorbierendes Gebiet, das den Schalldruck einer zu dämpfenden Schallwelle vermindert, auf der Innenwandfläche gebildet ist.

### Kurzfassung der Zeichnungen

- Fig. 1: ist eine erläutende Ansicht einer Messvorrichtung, die das Dämpfungsvermögen des Kanalschalldämpfers misst;
- Fig.2: ist eine perspektivische Ansicht, die den zu prüfenden Anordnungskörper des akustischen Rohrs des Kanalschalldämpfers zeigt;
- Fig.3: ist eine perspektivische Ansicht, die den zu prüfenden Anordnungskörper des akustischen Rohrs des Kanalschalldämpfers zeigt;
- Fig. 4: ist eine perspektivische Ansicht, die den zu prüfenden Anordnungskörper des akustischen Rohrs des Kanalschalldämpfers zeigt;
- Fig. 5: ist eine erläutende Ansicht der Grenzflächenstruktur des zu prüfenden Kanalschalldämpfers;
- Fig. 6: ist ein Diagramm, das das Messergebnis des Dämpfungsvermögens des Kanalschalldämpfers zeigt;
- Fig. 7: ist ein Diagramm, das das Messergebnis des Dämpfungsvermögens des Kanalschalldämpfers zeigt;
- Fig. 8: ist ein Diagramm, das das Messergebnis des Dämpfungsvermögens des Kanalschalldämpfers zeigt;
- Fig. 9: ist eine erläutende Ansicht, die den Anwendungszustand einer Verkörperung des Kanalschalldämpfers im Querschnitt zeigt;
- Fig. 10: ist eine erläutende Ansicht einer Querschnittsform längs einer Linie I-I in Fig. 1;
- Fig.11: ist eine erläutende Ansicht, die die Anordnung der akustisch weichen Gebiete und der akustisch nicht weichen Gebiete in einem Bereich II in Fig. 1 zeigt;
- Fig. 12: ist eine perspektivische Ansicht, die eine Verkörperung des Kanalschalldämpfers zeigt;
- Fig. 13: ist eine perspektivische Ansicht, die einen Kanalschalldämpfer einer anderen Verkörperung zeigt;
- Fig. 14: ist eine erläutende Ansicht der Grenzflächenstruktur des zu prüfenden Kanalschalldämpfers;
- Fig. 15: ist eine erläutende Ansicht der Grenzflächenstruktur des zu prüfenden Kanalschalldämpfers;
- Fig. 16: ist eine erläutende Ansicht einer Messvorrichtung, die das Dämpfungsvermögen des Kanalschalldämpfers misst;
- Fig. 17: ist ein Diagramm, das das Messergebnis des Dämpfungsvermögens des Kanalschalldämpfers zeigt;
- Fig. 18: ist ein Diagramm, das das Messergebnis des Dämpfungsvermögens des Kanalschalldämpfers zeigt;
- Fig. 19: ist eine erläutende Ansicht, die den Anwendungszustand einer anderen Verkörperung des Kanalschalldämpfers im Querschnitt zeigt;
- Fig. 20: ist eine erläutende Ansicht einer Querschnittform längs einer Linie III-III in Fig. 19;
- Fig. 21: ist eine erläutende Ansicht, die die Anordnung der akustisch weichen Gebiete und der akustisch nicht weichen Gebiete in einem Bereich IV in Fig. 19 zeigt;
- Fig. 22: ist ein Diagramm, das das Versuchsergebnis zeigt, das die vorteilhaften Auswirkungen bestätigt, wenn eine Folie an das Öffnungsteil des akustischen Rohrs angebracht wird;
- Fig. 23: ist eine erläutende Ansicht eines herkömmlichen Teilertyp-Kanalschalldämpfers;
- Fig. 24: ist eine erläutende Ansicht eines herkömmlichen Kammertyp-Kanalschalldämpfers, und
- Fig. 25(a) und 25(b): sind erläutende Ansichten, die einen Zustand zeigen, in dem ein akustisches Rohr mit einer Länge, die ein Viertel der Wellenlänge beträgt, in einem herkömmlichen Kammertyp-Kanalschalldämpfer angeordnet ist, wobei die Fig. 25(a) eine erläutende Ansicht ist, die einen Zustand zeigt, in dem ein akustisches Rohr mit einer Länge, die ein Viertel der Wellenlänge beträgt, an vier Außenflächen der Kammer angeordnet ist, und die Fig. 25(b) eine erläutende Ansicht ist, in der ein akustisches Rohr mit einer Länge, die ein Viertel der Wellenlänge beträgt, an nur zwei gegenüberliegenden Außenflächen der Kammer angeordnet ist.

Ein Schalldämpfer für einen Kanal gemäß der vorliegenden Erfindung wird derart angewendet, dass der Schalldämpfer an einem Luftschacht, der mit einem Lufteinlass und einem Luftauslass versehen ist, und an einem lüftenden Lüftungsloch befestigt ist. Hier wird bei den Verkörperungen, die danach beschrieben werden, als eine typische Verkörperung des Schalldämpfers für einen Kanal ein Kanalschalldämpfer erläutert, der an einem Luftschacht angeordnet ist. Allerdings ist es unnötig zu erwähnen, dass sich die vorliegende Erfindung nicht nur auf den Kanalschalldämpfer beschränkt ist, sondern auch bei einem Schalldämpfer, der in einem Kanal für eine Flüssigkeit oder ein Gas angeordnet ist, allgemein anwendbar ist.

Der Kanalschalldämpfer, der eine Verkörperung des Schalldämpfers für einen Kanal gemäß der vorliegenden Erfindung darstellt, besteht aus einem akustisch weichen Gebiet, in dem der Schalldruck an der Kanalinnenwandüäche annähernd Null ist, und aus einem akustisch nicht weichen Gebiet, in dem der Schalldruck an der Kanalinnenwandfläche nicht Null ist, wobei beide Gebiete abwechselnd über mehr als annähernd eine halbe Wellenlänge einer Schallwelle angeordnet sind, um diese Schallwelle in Längsrichtung des Kanals zu dämpfen.

Das heißt, dass der oben genannte Kanalschalldämpfer an der Innen- oder Außenseite des Kanals angeordnet werden kann, und wenn der Kanalschalldämpfer im Inneren des Kanals befestigt wird, wird eine neue Kanalinnenwandfläche aus dem akustisch weichen Gebiet und dem akustisch nicht weichen Gebiet an einer Stelle gebildet, an der die neue Kanalinnenwandfläche in Richtung der zentralen Kanalseite hervorsteht, während in demjenigen Fall, in dem der Schalldämpfer an der Außenseite des Kanals befestigt wird, eine neue Kanalinnenwand gebildet wird, die aus dem akustisch weichem Gebiet und dem akustisch nicht weichem Gebiet besteht und sich auf der gleichen Höhe befindet wie die ursprüngliche Kanalinnenwand.

Hier ist es vorzuziehen, dass die Einrichtung, die aus dem akustisch weichen Gebiet und dem akustisch nicht weichen Gebiet gebildet ist, mit mindestens einem Paar sich gegenüberliegenden Kanalinnenwandflächen versehen ist.

Wenn ferner der Kanalschalldämpfer als so genannter Kammertyp-Kanalschalldämpfer oder Teilertyp-Kanalschalldämpfer ausgebildet ist, der, wenn die Öffnungsweite des Kanals größer als die Wellenlänge der zu dämpfenden Schallwelle ist (nachstehend als Gegenstandsschallwelle bezeichnet), den Kanal durch Trennwände unterteilt, so dass das öffnungs-Querschnitts-Verhältnis an beiden Seitenwandflächen der Trennwand eine halbe Wellenlänge der zu dämpfenden Gegenstandsschallwelle oder geringer ist. Das akustisch weiche Gebiet, in dem der Schalldruck an der Wandfläche annähernd Null ist, und das akustisch nicht weiche Gebiet, in dem der Schalldruck an der Wandfläche nicht Null ist, sind abwechselnd über mehr als annähernd eine halbe Wellenlänge einer Schallwelle angeordnet, um diese Schallwelle in Längsrichtung des Kanals zu dämpfen.

Durch die Anordnung des Kanalschalldämpfers an der Trennwand wird durch das akustisch weiche Gebiet und das akustisch nicht weiche Gebiet des Kanalschalldämpfers eine neue Wandfläche gebildet.

Das heißt, wenn der Kanalschalldämpfer in einem Luftschacht angeordnet ist, wird ein vorbestimmter Bereich der Kanalinnenwandfläche oder eine Wandfläche einer Trennwand aus einem akustisch weichem Gebiet und einem akustisch nicht weichem Gebiet des Kanalschalldämpfers gebildet.

Das oben genannte, akustisch nicht weiche Gebiet enthält ein schallabsorbierendes Gebiet, das zur Verminderung eines Schalldrucks, der nicht Null ist, dient, wobei ein schallabsorbierendes Glied verwendet wird, wie beispielsweise metallische Fasern, die beispielsweise aus Glaswolle, Steinwolle und Aluminiumfasern, geschäumtes Aluminium, keramisches, absorbierendes Material oder Ähnlichem bestehen, und ein akustisch festes Gebiet, das aus einem festen Körper, wie beispielsweise einer Metallplatte, auf gleiche Weise wie ein Kanal gefertigt ist und keine schalldruckvermindemde Funktion oder Ähnliches aufweist. In dem akustisch weichen Gebiet ist eine dämpfende Funktion (eine geräuschvermindernde Funktion) keine Voraussetzung. Beispielsweise kann eine ursprüngliche Kanalwandfläche als akustisch nicht weiches Gebiet verwendet werden.

Ferner sind im Kanalschalldämpfer das akustisch nicht weiche Gebiet und das akustisch weiche Gebiet, das eine dämpfende Funktion hat, abwechselnd an der Kanalinnenwandfläche oder an beiden Seitenwandflächen der Trennwand angeordnet. Das heißt, dass das akustisch weiche Gebiet und das akustisch nicht weiche Gebiet an der Kanalinnenwandfläche oder an beiden Seitenwandflächen der Trennwand parallel zu einander in einem schachbrettartigen oder gestreiften Muster angeordnet sind.

Auf diese Weise ist an der Kanalinnenwandfläche oder an beiden Seitenwandflächen der Trennwand nicht nur das akustisch weiche Gebiet, sondern auch das akustisch nicht weiche Gebiet angeordnet, und deshalb kann ein Bereich der vom akustisch weichen Gebiet besetzt ist, das auf bestimmte Weise errichtet sein muss, mit einem Schalldruck, der Null ist, vermindert werden, wodurch sich der Kanalbereich, in dem der Kanalschalldämpfer der vorliegenden Erfindung befestigt werden kann, vergrößert.

Ganz abgesehen davon, dass die zu dämpfende Schallwelle durch die Dämpfungsfunktion des akustisch weichen Gebiets gedämpft werden kann, kann im Kanalinnerem durch die Anwendung des akustisch nicht weichen Gebiets, das abwechselnd mit dem akustisch weichen Gebiet als entweder das schallabsorbierende Gebiet oder das akustisch feste Gebiet, das zuvor erwähnt wurde, angeordnet wird, der Kanalschalldämpfer für mehrere Zwecke verwendet werden.

Bei der Annahme, dass das oben genannte, akustisch nicht weiche Gebiet ein geräuschminderndes, akustisches Gebiet ist und bei der Bildung des nicht weichen Gebiets durch Verwendung eines geräuschmindernden Glieds, beispielsweise eines Fasermaterials, das den Schalldruck vermindern kann, ist es insbesondere möglich, nicht nur eine Schallwelle in einem vorbestimmten Frequenzband, die eine Gegenstandswelle im weichen, akustischen Gebiet ist, sondern auch eine Schallwelle in einem unterschiedlichen, vorbestimmten Frequenzband im nicht akustischen Gebiet zu dämpfen, in dessen Frequenzband die Schallwelle dadurch gedämpft werden kann, dass der Schalldämpfer derart erweitert werden kann, dass er die Dämpfungswirkung erhöht.

Wie schon oben erwähnt wurde, kann dadurch, dass die Kanalwandfläche an sich als akustisch nicht weiches Gebiet ausgebildet wird, der Verwendung einer neuen Einrichtung vorgebeugt werden, und deshalb wird der Schalldämpfer nur leicht belastet.

Um genauer zu sein, kann andererseits das akustisch weiche Gebiet aus einem akustischen Rohr mit einer Länge bestehen (ein akustisches Rohr mit einer Länge, die ein Viertel einer Wellenlänge beträgt), die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist. Wenn das akustisch weiche Gebiet aus einem solchen akustischen Rohr besteht, ist es möglich, Geräusche von verschiedenen Wellenlängen zu dämpfen, indem die Länge des akustischen Rohrs entsprechend einer Wellenlänge eines zu dämpfenden Geräusches geändert wird.

Das akustisch nicht weiche Gebiet könnte auch zwischen den akustischen Rohren, die das akustisch weiche Gebiet errichten, gebildet werden. Demzufolge könnte, auch wenn das akustisch weiche Gebiet von akustischen Rohren besetzt ist, das akustisch nicht weiche Gebiet als offene Flächen vorgesehen werden, und daher ist es möglich, diese offenen Flächen für andere Zwecke zu verwenden. Beispielsweise ist, wenn der Kanalschalldämpfer an der Kanalaußenseite angeordnet ist, der Kanalschalldämpfer in hervorstehender Weise am äußeren Kanalrand befestigt. Wenn das akustisch nicht weiche Gebiet als offene Flächen verwendet wird, ist es allerdings sogar auf einer begrenzten Fläche bzw. auf einem schmalen Raum, wie etwa einem Dachbodenraum, oder innerhalb einer Wand, an der viele andere Drähte, Rohre und Ähnliches angeordnet sind, möglich, die Möglichkeit zu erweitern, dass der Kanalschalldämpfer der vorliegenden Erfindung angeordnet werden kann.

Wenn eine Folie anordnet wird, die einen kleinen, akustischen Widerstand und einen äußerst großen Widerstand als Flüssigkeit auf das Öffnungsteil des akustischen Rohrs ausübt, ist es möglich, das akustisch weiche Gebiet aus akustischen Rohren zu errichten, die kürzer als die oben genannten Rohre mit einer Länge sind, die ein Viertel der Wellenlänge beträgt. Wenn nun das Öffnungsteil des akustischen Rohrs mit einer aus Kunststoff oder Ähnlichem gebildeten Folie verschlossen wird, ist es möglich, die Verkleinerung des Kanalschalldämpfers ohne Mühe sowie auch seine Anordnung und die Minderung seines Gewichts durchzuführen.

Auf diese Weise, wenn das offene Teil der akustischen Rohre mit einer Folie verschlossen wird, ist es möglich, die Erzeugung der Geräusche, die durch eine Luftströmung im Kanalinnerem verursacht werden und auf das offene Rohrende stoßen, vorher zu verhindern, so dass die Strömung im Kanal unterbrochen wird.

Wenn die oben genannten, akustischen Rohre an den Trennwänden, die das Kanalinnere in eine Vielzahl von kleinen Kanälen aufteilen, angeordnet werden, ist es möglich, das akustisch weiche Gebiet dadurch zu bilden, dass das offene Rohrende auf der einen Wandfläche der Trennwand angeordnet ist, und das akustisch nicht weiche Gebiet dadurch zu bilden, dass das geschlossene Rohrende auf der anderen Wandfläche der Trennwand angeordnet ist. Aufgrund dieser Einrichtung ist es ausreichend, dass die Dicke der Trennwand auf die Länge eines akustischen Rohrs gesetzt ist, und daher kann die Trennwand dünn ausgebildet werden. Auch wenn der Kanal durch die Trennwände aufgeteilt ist, kann daher ein Bereich, in dem die Trennwände im Querschnitt eines Kanals vorhanden sind, so viel wie möglich vermindert werden, und somit kann die Gegenstandsschallwelle gedämpft werden, ohne dass die Luftströmung im Kanalinnerem gesenkt wird.

Um das akustisch weiche Gebiet und das akustisch nicht weiche Gebiet abwechselnd anzuordnen, wie es oben beschrieben wurde, muss die Gegenstandsschallwelle, auch wenn das akustisch weiche Gebiet nicht kontinuierlich über mehr als annähernd eine halbe Wellenlänge einer Schallwelle oder mehr in Längsrichtung des Kanals reicht, in den akustisch weichen Gebieten gedämpft werden, die in vorbestimmten Abständen innerhalb der oben genannten, halben Wellenlänge angeordnet sind. Allerdings wird dieser Beweis durch einen vergleichenden Test geprüft, so dass das Dämpfungsvermögen eines Kanalschalldämpfers, in dem das akustisch weiche Gebiet kontinuierlich vorhanden ist, und das Dämpfungsvermögen eines Kanalschalldämpfers, in dem das akustisch weiche Gebiet und das akustisch nicht weiche Gebiet abwechselnd vorhanden sind, miteinander verglichen werden. Nachstehend wird der vergleichende Test im Zusammenhang mit den Zeichnungen erläutert.

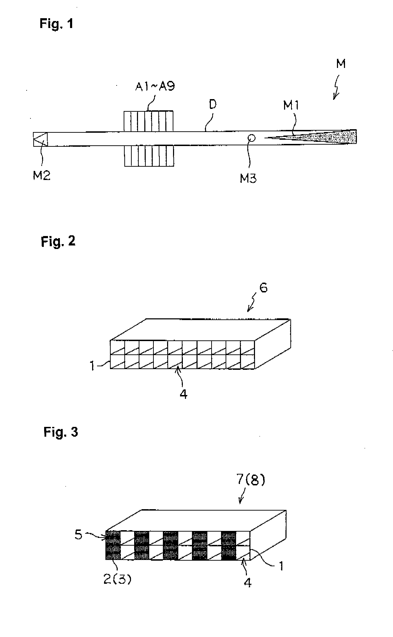

Fig.1 zeigt eine Messvorrichtung M, die das Dämpfungsvermögen des Kanalschalldämpfers misst.

Die Messvorrichtung M besteht aus einem aus Acrylharz gebildeten Kanal D, der eine quadratische Querschnittsform von 10cmx10cm und eine Länge von 2m aufweist. Ein Endteil des Kanalendes D ist als nicht reflektierendes Ende ausgebildet, an dem ein schallabsorbierender Keil M1 angeordnet ist. Ein Lautsprecher M2, der eine Schallquelle darstellt, ist an einem Anfangsteil des Kanals D gegenüber dem nicht reflektierenden Ende angebracht, und ein Mikrofon M3, das das ausgegebene Geräusch aus dem Lautsprecher M2 sammelt, ist vor dem schallabsorbierenden Keil M1 angeordnet, der näher am nicht reflektierenden Ende als der Lautsprecher M2 angeordnet ist.

Zwischen dem Lautsprecher M2 und dem Mikrofon M3, dass heißt am Mittelteil des Kanals D, der näher am nicht reflektierenden Ende als der Lautsprecher M2 angeordnet ist, ist ein zu prüfender Kanalschalldämpfer angeordnet, und deshalb könnte gemessen werden, wie viele Geräusche, die aus dem Lautsprecher M2 ausgegeben werden, beim Durchlaufen des Kanalschalldämpfers gedämpft werden.

Die Figuren 2-4 zeigen eine akustische Rohrreihe, aus der Kanalschalldämpfer A1 bis A9 zusammengestellt sind, die hier geprüft worden sind.

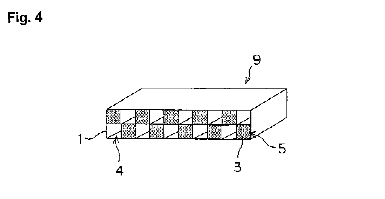

Die akustische Rohrreihe ist errichtet, um die mehrfachen, akustischen Rohre in eine Reihe in senkrechter und/oder waagerechter Richtung anzuordnen, und besteht aus einer ersten akustischen Rohrreihe 6, in der die aus Aluminium gebildeten, akustischen Rohre 1 (mit einer Länge, die ein Viertel einer Wellenlänge beträgt) mit einer Querschnittsform von 5x5 cm und einer Länge von einem Viertel der Wellenlänge einer 1000 Hz-Schallwelle, nebeneinander in zwei Reihen und zehn Spalten angeordnet sind, wie in Fig. 2 dargestellt ist. Die erste akustische Rohrreihe 6 ist derart befestigt, dass eine Fläche b (nachstehend als Grenzfläche bezeichnet) mit dem Innenraum des Kanals D eine Grenze bildet, dass heißt, dass die Innenwandfläche des Kanals zum Öffnungsteil des ersten akustischen Rohrs 1 wird. In einer zweiten akustischen Rohrreihe 7 sind die Öffnungen der akustischen Rohre gerader oder ungerader Zahlreihen aus der ersten akustischen Rohrreihe 6 mit einem festen Körper 2 geschlossen, wie beispielsweise mit einer Aluminiumplatte, wie in Fig. 3 dargestellt ist. In einer dritten akustischen Rohrreihe 8 wird Glaswolle des schallabsorbierenden Glieds 3 am festen Körper 2 befestigt, der die Öffnungen des akustischen Rohrs 1 der zweiten akustischen Rohrreihe 7 schließt. In einer vierten akustischen Rohrreihe 9 sind die Öffnungen des akustischen Rohrs 1 der ersten akustischen Rohrreihe 6 abwechselnd durch die Aluminiumplatten in einem schachbrettartigen Muster geschlossen, wie in Fig. 4 dargestellt ist. Gleichzeitig wird Glaswolle des schallabsorbieren der Glieds 8 am festen Körper befestigt.

Das heißt, die oben genannte erste bis vierte akustische Rohrreihe 6, 7, 8, 9 ist so entworfen, um die zu dämpfende Frequenz 1000 Hz festzusetzen, insbesondere die erste akustische Rohrreihe 6 mit einer Länge von einer halben Wellenlänge einer zu dämpfenden Frequenz oder mehr weist das akustisch weiche Gebiet über der ganzen Grenzfläche b auf; die zweite Rohrreihe 7 und dritte akustische Rohrreihe 8 mit einer Länge von einer halben Wellenlänge einer zu dämpfenden Frequenz oder mehr weisen das akustisch weiche Gebiet und das akustisch nicht weiche Gebiet in einem gestreiften Muster über der ganzen Grenzfläche b auf, und die vierte akustische Rohrreihe 9 mit einer Länge von einer halben Wellenlänge einer zu dämpfenden Frequenz oder mehr weist das akustisch weiche Gebiet und das akustisch nicht weiche Gebiet in einem schachbrettartigem Muster über der ganzen Grenzfläche auf. In dieser Vergleichprüfung werden durch die Vereinigung einer Vielzahl der oben genannten ersten bis vierten akustischen Rohrreihe 6, 7, 8, 9 neun Arten des Schalldämpfers (der erste bis zum neunten Schalldämpfer A1 bis A9) gebildet.

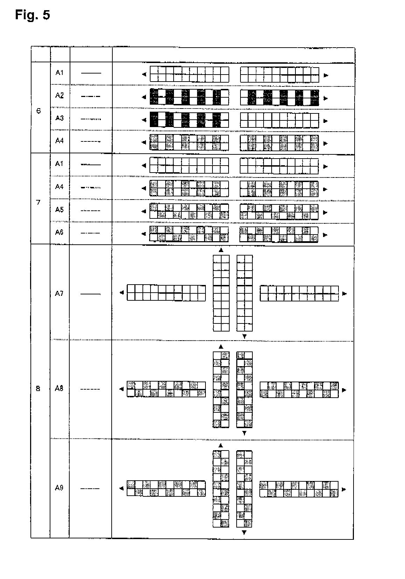

Fig. 5 zeigt eine Grenzflächenstruktur der akustischen Rohrreihe in den jeweiligen Schalldämpfern A1 bis A9. Wie in den Figuren dargestellt, besteht der erste Schalldämpfer A1 bis zum sechsten Schalldämpfer A6 aus zwei akustischen Rohrreihen, die an der linken und rechten Wand des Kanals D angeordnet sind, während der siebte Schalldämpfer A7 bis hin zum neunten Schalldämpfer A9 aus vier akustischen Rohrreihen besteht, die an der linken, rechten, oberen und unteren Wand des Kanals D angeordnet sind. In den Figuren zeigt ein volles Dreieck die Richtung der Anfangs- bzw. Endseite (die Seite, an der der Lautsprecher M2 angeordnet ist) des Kanals D an.

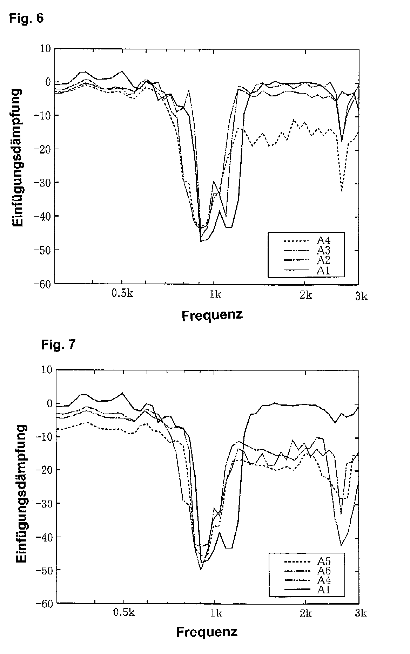

In den Figuren 6-8 wird ein Ergebnis des gemessenen Dämpfungsvermögens des ersten Schalldämpfers A1 bis zum neunten Schalldämpfer A9 gezeigt. In den Figuren 6-8 wird auf einer Y-Achse das Klangvolumen (in dB) der Schallwelle als Dämpfungsvermögen des Bezugswerts genommen, wobei die Schalldämpfer A1 bis A9 nicht angeordnet sind und es somit ermöglicht wird, dass die ganze Innenwandfläche des Kanals D ein fester Körper 2 ist, wobei das Klangvolumen (in dB) der Schallwelle, die vom Mikrofon M3 empfangen wird, als Bezugswert/ festgesetzt wird und das Klangvolumen der Schallwelle erst dann aufgenommen wird, wenn die jeweiligen Schalldämpfer A1 bis A9 eingesetzt werden. Die X-Achse ist eine Frequenz-Mittellinie, die den Frequenzbereich zwischen 300Hz bis 3000 Hz zeigt.

Fig. 6 zeigt ein Messergebnis der Schalldämpfer A2, A3 und A4 in der zweiten akustischen Rohrreihe 7 und dritten akustischen Rohrreihe 8, in denen die Grenzfläche b in Form von Streifen angeordnet ist und die auf einem Paar gegenüberliegender Flächen des Kanals D angebracht sind.

Eine durchgezogene Linie, wie sie in Fig. 5 dargestellt ist, zeigt ein Messergebnis des ersten Schalldämpfers A1 als Vergleichsbeispiel, wobei die erste akustische Rohrreihe 6, deren Grenzfläche b vollständig aus dem akustisch weichen Gebiet 4 besteht, an einem Paar gegenüberliegender Flächen des Kanals D angeordnet ist und eine geräuschmindernde Wirkung zeigt, die ≥40 dB in einem Bereich von etwa 850-1200 Hz mit der Mitte von 1000 Hz beträgt.

Eine strichpunktierte Linie, wie sie in Fig.5 dargestellt ist, zeigt ein Messergebnis des zweiten Schalldämpfers A2, wobei sich die Grenzflächenstrukturen von gegenüberliegenden Paaren der zweiten akustischen Rohrreihe 7 derart zusammenpassen, dass sich das weiche akustische Gebiet 4 mit dem weichen akustischen Gebiet 4 und das nicht weiche akustische Gebiet 5 mit dem nicht weichen akustischen Gebiet 5 deckt.
Obwohl die geräuschmindernde Wirkung des Schalldämpfers A2 ungefähr gleich der geräuschmindernden Wirkung des ersten Schalldämpfers A1 ist, wird das Frequenzband im zweiten Schalldämpfer A2, das die geräuschmindernde Wirkung anzeigt, in Richtung der Niederfrequenz verschoben.

Eine strichdoppelpunktierte Linie, wie sie in Fig. 5 dargestellt ist, zeigt ein Messergebnis des dritten Schalldämpfers A3, wobei eine andere akustische Rohrreihe, die der zweiten akustischen Rohrreihe gegenüberliegt, die erste akustische Rohrreihe 6 ist und die Obergrenze des Frequenzbands, in dem die geräuschmindernde Wirkung zu sehen ist, etwas höher als die Obergrenze des Frequenzbands des zweiten Schalldämpfers A2 ist.

Eine dick gestrichelte Linie, wie sie in Fig. 5 dargestellt ist, zeigt ein Messergebnis des vierten Schalldämpfers A4, wobei die Grenzflächenstrukturen von gegenüberliegenden Paaren der dritten akustischen Rohrreihe 8 zusammenpassen und die geräuschmindernde Wirkung vor und nach 1000 Hz, die die festgelegte zu dämpfende Frequenz ist, keine Änderungen aufweist, während bei einem höheren Frequenzband eine große Dämpfung (etwa 15 dB) erzielt wird. Das ist die Wirkung des schallabsorbierenden Glieds 3.

Fig. 7 zeigt das Messergebnis der Schalldämpfer A5 und A6, wobei die vierte akustische Rohrreihe 9, in der die Grenzfläche b aus dem akustisch weichen Gebiet 4 und dem akustisch nicht weichen Gebiet 5 besteht, die in einem schachbrettartigem Muster als Paar gegenüberliegender Flächen des Kanals D angeordnet sind.

In Fig. 7 werden als Vergleichsbeispiel die Messergebnisse des ersten Schalldämpfers A1 und des vierten Schalldämpfers A4 gezeigt, die im Vergleich zur oben genannten Fig. 6 erläutert werden. Die durchgezogene Linie zeigt ein Messergebnis des ersten Schalldämpfers A1 und die strichdoppelpunktierte Linie zeigt ein Messergebnis des vierten Schalldämpfers A4.

Die dick gestrichelte Linie, wie sie in Fig. 7 dargestellt ist, zeigt das Messergebnis des fünften Schalldämpfers A5, wobei sich die Grenzflächenstrukturen des gegenüberliegenden Paars der vierten akustischen Rohrreihe 9 überschneiden und die Obergrenze des Frequenzbands, in dem die geräuschmindernde Wirkung zu sehen ist, ungefähr gleich wie die in dem oben genanntem zweiten Schalldämpfer A4 ist, jedoch ist die Untergrenze des Frequenzbands im fünften Schalldämpfer A5 ein wenig höher. Obwohl die geräuschmindernde Wirkung nicht offensichtlich ist, kann im Falle des fünften Schalldämpfers A5 in dem zu dämpfenden Frequenzband, das ≤1000 Hz ist, ein gewisser Grad der geräuschmindernden Wirkung festgestellt werden.

Die strichpunktierte Linie zeigt ein Messergebnis des sechsten Schalldämpfers A6, wobei anders als beim fünften Schalldämpfer A5 das gegenüberliegende Paar der Grenzflächenstruktur der dritten akustischen Rohrreihe 8 aus dem akustisch weichen Gebiet 4 und dem akustisch nicht weichen Gebiet 5 besteht, die miteinander widersprüchlich sind. Wenn der sechste Schalldämpfer A6 mit dem fünften Schalldämpfer A5 verglichen wird, obwohl das Frequenzband, in dem die geräuschmindernde Wirkung auftritt, annähernd das gleiche wie beim fünften Schalldämpfer A5 ist, ist die schallmindernde Wirkung des sechsten Schalldämpfers A6 durch Eliminieren der Frequenzen vor und nach der Frequenz von 1000 Hz, die die zu dämpfende Frequenz ist, im Ganzen geringer als die geräuschmindernde Wirkung des fünften Schalldämpfers A5.

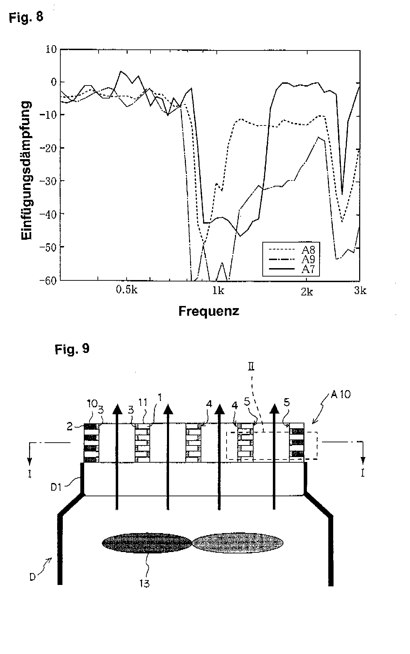

Fig. 8 zeigt ein Messergebnis der Schalldämpfer A8, A9, bei denen die vierte akustische Rohrreihe 9, deren Grenzflächen b in einem schachbrettartigen Muster gebildet sind, das aus dem akustisch weichen Gebiet 4 und dem akustisch nicht weichen Gebiet 5 besteht, an den ganzen vier Flächen des Kanals D angeordnet sind.

Wie in Fig. 5 dargestellt, zeigt eine durchgezogene Linie als Vergleichsbeispiel das Messergebnis des siebten Schalldämpfer A7, bei dem die erste akustische Rohrreihe 6, in der die ganze Grenzfläche b aus dem akustisch weichen Gebiet 4 gebildet ist, an allen vier Flächen des Kanals D angeordnet ist. Das Ergebnis zeigt, dass der siebte Schalldämpfer A7 im Wesentlichen die gleiche geräuschmindernde Wirkung von ≥40 dB um die 1000 Hz wie der oben genannte erste Schalldämpfer A1 aufweist.

Wie in Fig. 5 dargestellt ist, zeigt eine dick punktierte Linie ein Messergebnis des achten Schalldämpfers A8, in dem die Grenzflächenstrukturen der zwei sich gegenüberliegenden vierten akustischen Rohrreihen 9 in den jeweiligen zwei Paaren sich gegenüberliegender, vierter, akustischer Rohrreihen 9 miteinander übereinstimmen.

Eine schwache, strichpunktierte Linie zeigt ein Messergebnis des neunten Schalldämpfers A9, bei dem die Grenzflächenstrukturen der zwei gegenüberliegenden, vierten, akustischen Reihen 9 anders als im achten Schalldämpfer A8 in den jeweiligen zwei Paaren der gegenüberliegenden, vierten, akustischen Rohrreihen 9 nicht miteinander übereinstimmen. Das Ergebnis zeigt auch, dass bei der Frequenz um die 1000 Hz, die die Frequenz des zu dämpfenden Gegenstands ist, eine große schallmindernde Wirkung auftritt und dass in der Nähe der Frequenz von 2000 Hz eine große schallmindernde Wirkung von 30 dB erzielt wird.

Gemäß den in den Figuren 6-8 dargestellten Messergebnissen, auch wenn das akustisch weiche Gebiet 4 nicht über mehr als annähernd eine halbe Wellenlänge einer Gegenstandsschallwelle (hier 1000 Hz) in Längsrichtung des Kanals angeordnet ist, ist es möglich, durch das akustisch nicht weiche Gebiet 5 und das akustisch weiche Gebiet 4, die abwechselnd miteinander zwischen den halben Wellenlängen angeordnet sind, eine Dämpfungsfunktion zu erreichen, die der Dämpfungsfunktion entspricht, die erreicht wird, wenn das akustisch weiche Gebiet 4 kontinuierlich angeordnet wird.

Wenn ferner das akustisch nicht weiche Gebiet 5 aus einem schallabsorbierenden, akustischen Gebiet, das aus dem schallabsorbierenden Glied 3 gebildet ist, besteht, wird zusätzlich zu der Dämpfungsfunktion des akustisch weichen Gebiets 4 eine Dämpfungsfunktion durch das schallabsorbierende akustische Gebiet vorgesehen wird, ist es möglich, das Frequenzband, in dem eine Dämpfungswirkung auftritt, auszudehnen.

Als nächstes wird ein Ausführungsbeispiel eines Kanalschalldämpfers ausführlich im Zusammenhang mit den Figuren erläutert, wobei der Kanalschalldämpfer bei einem Kammertyp-Kanalschalldämpfer angewandt wird.

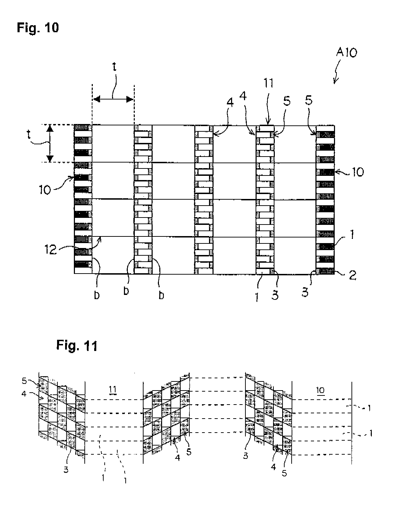

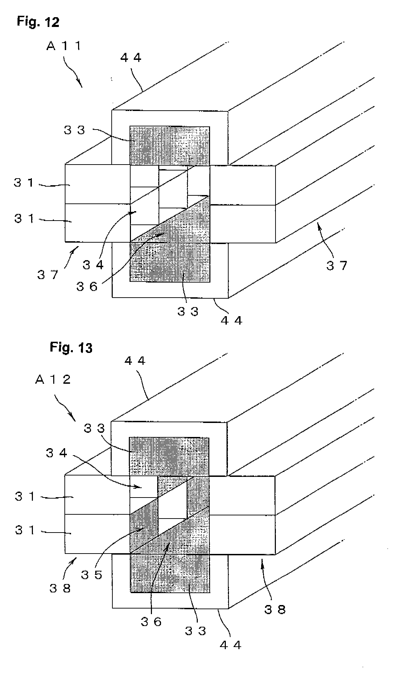

Fig. 9 ist ein Querschnitt, der den Kanalschalldämpfers im Betriebszustand zeigt, während Fig. 10 einen Querschnitt gemäß der Linie I-I in Fig. 1 wiedergibt. Fig. 11 ist eine erläuternde Ansicht der Fig. 1, wobei diese Ansicht die Anordnung des akustisch weichen Gebiets 4 und des akustisch nicht weichen Gebiets 5 in einem Bereich II zeigt.

Wie in den Figuren dargestellt ist, ist der Kanalschalldämpfer A10 bei diesem Ausführungsbeispiel an einer Saugöffnung D1 eines rechteckförmigem Kanals D angeordnet, der einen Kühlturm für eine Klimaanlage darstellt und aus akustischen Rohrreihen für einen Kanal, die an einem Paar gegenüberliegender Innenwandflächen des Kanals D befestigt sind, aus akustischen Rohrreihen für Trennwände, die drei Längstrennwände umfassen, die den Kanal in Längsrichtung aufteilen, und aus drei seitlichen Trennwänden 12 besteht, die den Kanal in Querrichtung aufteilen. In Fig. 9 bezeichnet die Bezugsziffer Ziffer 13 einen Ventilator.

Die akustischen Rohrreihen für die Kanalwände 10 sind in Plattenform ausgebildet und weisen eine Anordnung akustischer Rohre 1 aus Aluminium mit einer Länge auf, die ein Viertel einer Wellenlänge beträgt. Die Rohre 1 weisen eine rechteckige Querschnittsform mit einem geschlossenem Ende auf, während ein anderes, offenes Ende entlang der Kanalwand in senkrechter und waagerechter Richtung und gleichzeitig auch die Öffnungen des akustischen Rohrs 1 abwechselnd durch feste Körper 2, wie beispielsweise Aluminiumplatten, verschlossen werden. Aus Glaswolle gebildete, schallabsorbierende Glieder 3 sind an die festen Körper 2 derart befestigt, dass das geschlossene oder offene Ende nicht kontinuierlich zwischen den zwei angrenzenden, akustischen Rohren 1 mit einer Länge, die ein Viertel der Wellenlänge beträgt, angeordnet ist. Wie in Fig. 11 dargestellt ist, bilden die Grenzflächen b eine Grenze mit einem Innenraum des Kanals D, d. h., dass die Innenwandflächen des Kanals D aus den Öffnungen (akustisch weiches Gebiet 4) der akustischen Rohre 1 und aus den schallabsorbierenden Gliedern 3 (akustisch nicht weiches Gebiet 5) bestehen, die an den festen Körpern 2 in einem schachbrettartigen Muster befestigt sind.

Andererseits ist die akustische Rohrreihe für die Trennwand 11 durch eine abwechselnde Anordnung von aus Aluminium gebildeten, akustischen Rohren 1 mit einem geschlossenen Ende, die eine rechteckige Querschnittsform und eine Länge aufweisen, die ein Viertel einer Wellenlänge beträgt, in Plattenform gebildet, während ein anderes offenes Ende parallel zu einer senkrechten Richtung derart befestigt ist, dass das geschlossene oder offene Ende nicht kontinuierlich zwischen den zwei angrenzenden, akustischen Rohren 1 mit einer Länge, die ein Viertel der Wellenlänge beträgt, angeordnet ist. Bei diesem Ausführungsbeispiel bildet die akustische Rohrreihe eine Trennwand 11, unter den gegeben Umständen eine Längstrennwand.

Das heißt, dass die akustische Rohrreihe für eine Trennwand 11 derart ausgebildet ist, dass beide Flächen, die vordere und die hintere, eine Grenzfläche b bilden, die eine Grenze mit einem Innenraum des Kanals D darstellt, und dass das akustische Rohr 1, dessen offener Teil (Rohrende) an einer Grenzfläche b angeordnet ist, derart ausgebildet ist, dass der geschlossene Teil (Rohrende) an einer anderen Grenzfläche b angeordnet ist. Ferner ist das aus Glaswolle gebildete, schallabsorbierende Glied 3 an dem oben genannten, geschlossenen Rohrende befestigt, und auf den Grenzflächen b, b der beiden vorderen und hinteren Seiten der akustischen Rohrreihe für eine Trennwand 11, wie in Fig. 11 dargestellt, sind das Öffnungsteil des akustischen Rohrs 1 und die schallabsorbierenden Glieder 3 (das akustisch nicht weiche Gebiet) des geschlossenen Teils in einem schachbrettartigen Muster angeordnet.

Bei diesem Ausführungsbeispiel sind die oben genannte akustische Rohrreihe für eine Kanalwand 10 und eine akustische Rohrreihe für eine Trennwand 11 über die Länge, die eine halbe Wellenlänge oder mehr einer zu dämpfenden Schallwelle beträgt, in Längsrichtung angeordnet.

Ferner besteht die seitliche Trennwand 12 aus einem festen Körper 2, beispielsweise einer Aluminiumplatte, die durch die seitliche Trennwand 12 und die akustische Rohrreihe für eine Trennwand 11 aufgeteilt ist, die die oben genannte Längstrennwand derart bildet, dass die Öffnungsweite t des Kanals D die Hälfte oder weniger einer Wellenlänge aufweist.

Auf diese Weise sorgt das akustische Rohr 1, das das akustisch weiche Gebiet 4 an einer Grenzfläche b aufweist, für das akustisch nicht weiche Gebiet 5 an einer anderen Grenzfläche b im Kanalschalldämpfer A10 gemäß diesem Ausführungsbeispiel, da das Öffnungsteil des akustischen Rohrs 1 in der Trennwand 11 (die akustische Rohrreihe für eine Trennwand 11) aus einem akustisch weichen Gebiet 4 besteht und gleichzeitig das geschlossene Teil aus dem akustisch nicht weichen Gebiet 5 besteht. Daher kann eine dünne Trennwand 11 (die akustische Rohrreihe für eine Trennwand 11) zusammen mit der Dämpfungsfunktion gebildet werden, und ein Geräusch, das sich im Kanal D verbreitet, kann gedämpft werden, ohne dass die Saugleistung aus dem Kanal D vermindert wird.

Darüber hinaus, Da Geräusche absorbiert werden können, indem man ein schallabsorbierendes Glied 3 an das akustisch nicht weiche Gebiet 5 befestigt, kann zusätzlich zu dem Frequenzband, das durch das akustisch weiche Gebiet 4 gedämpft werden kann, ein anderes Frequenzband auch in dem akustisch nicht weichen Gebiet 5 gedämpft werden, und damit ist ein Kanalschalldämpfer A10 geschaffen, der eine hohe Dämpfungswirkung aufweist.

In dem Kanal, der eine rechteckige Querschnittsform des Kanalschalldämpfers aufweist, ist ein erstes Dämpfungsmittel auf einem Paar aus Innenwandflächen angeordnet, und gleichzeitig ist ein zweites Dämpfungsmittel, das eine von der des ersten Dämpfungsmittels unterschiedliche Dämpfungseigenschaft aufweist, auf dem anderen Paar aus Innenwandflächen befestigt.

Wenn das Maß der Öffnungsweite des Kanals länger als die Wellenlänge einer zu dämpfenden Schallwelle (nachstehend als eine zu dämpfende Schallwelle bezeichnet) ist, wird außerdem der Kanal durch Trennwände aufgeteilt, um in dem Kanal eine Vielzahl von kleinen Kanälen mit rechteckförmigem Querschnitt zu bilden, so dass die Öffnungsweite eine halbe Wellenlänge einer zu dämpfenden Schallwelle oder mehr beträgt, wie beispielsweise beim Kammertyp-Schalldämpfer oder Teilertyp-Kanalschalldämpfer. Auf zwei Paaren sich gegenüberliegender Innenwandflächen der kleinen Kanäle ist auf einem Paar aus Innenwandflächen ein erstes Dämpfungsmittel angeordnet, und gleichzeitig kann auf einem anderen Paar aus Innenwandflächen ein zweites Dämpfungsmittel angeordnet werden, das eine von der des ersten Dämpfungsmittels unterschiedliche Dämpfungseigenschaft aufweist.

Die oben genannte Dämpfungseigenschaft empfiehlt ein Frequenzband, das mit den entsprechenden Dämpfungsmitteln gedämpft werden kann, und eine Dämpfung der Schallwelle, die anschließend gedämpft wird. Wenn zwei Arten von Dämpfungsmitteln anwendet werden, von denen jedes eine unterschiedliche Dämpfungseigenschaft aufweist, kann auf diese Weise die Schallwelle von verschiedenen Frequenzbändern durch ein entsprechendes Dämpfungsmittel gedämpft werden, und das Frequenzband, das gedämpft werden kann, kann ausgedehnt werden. Wenn vor allem zwei Dämpfungsmittel, die unterschiedliche Dämpfungseigenschaften aufweisen, miteinander kombiniert werden, wie es beim ersten Dämpfungsmittel und zweiten Dämpfungsmittel der Fall ist, kann ein umso ausgedehnteres Frequenzband gedämpft werden.

Diese zwei Arten von Dämpfungsmitteln können dort kombiniert werden, wo ein erstes Dämpfungsmittel, dass derart angeordnet ist, dass das akustisch weiche Gebiet, in dem der Schalldruck an der Innenwandfläche annähernd Null ist und über mehr als annähernd eine halbe Wellenlänge einer Schallwelle reicht, um diese Schallwelle in Längsrichtung des Kanals zu dämpfen, und ein zweites Dämpfungsmittel, das derart angeordnet ist, dass die schallabsorbierenden Teile, die zur Verminderung des Schalldrucks der zu dämpfenden Schallwelle dienen, an Innenwandflächen gebildet sind, verwendet wird. Indem die oben genannte Einrichtung angewendet wird, kann die Schallwelle des exklusiven Frequenzbands, die den Hauptbestandteil der Geräusche bildet, durch das erste Dämpfungsmittel gedämpft werden, und gleichzeitig kann die Schallwelle des ausgedehnteren Frequenzbands, die nicht durch das erste Dämpfungsmittel gedämpft worden ist, durch das zweite Dämpfungsmittel gedämpft werden, um so die Geräusche wirksam zu vermindern.

Der oben genannte Kanalschalldämpfer kann an der Innen- oder Außenseite des Kanals angeordnet werden, und wenn der Kanalschalldämpfer im Inneren des Kanals befestigt wird, wird eine neue Kanalinnenwand aus dem akustisch weichem Gebiet und dem schallabsorbierenden Teil an einer Stelle gebildet, an der die neue Kanalinnenwandfläche in Richtung der zentralen Kanalseite hervorsteht, während in demjenigen Fall, in dem der Kanalschalldämpfer an der Außenseite des Kanals befestigt wird, eine neue Kanalinnenwand, die aus dem akustisch weichen Gebiet und dem schallabsorbierenden Teil besteht, auf der gleichen Höhe wie die ursprüngliche Kanalinnenwand gebildet wird.

Das akustisch weiche Gebiet, das aus dem ersten Dämpfungsmittel gebildet ist, kann aus einem akustischen Rohr (ein akustisches Rohr mit einer Länge, die ein Viertel der Wellenlänge beträgt) mit einer Länge bestehen, die sich von einem an einer Innenwandfläche angeordneten, offenen Rohrende zu einem geschlossenen Rohrende erstreckt, wobei diese Länge auf ein Viertel der Wellenlänge einer zu dämpfenden Schallwelle gesetzt ist. Wenn das akustisch weiche Gebiet aus diesem akustischen Rohr besteht, ist es möglich, Geräusche von verschiedenen Wellenlängen zu dämpfen, wobei die Länge des akustischen Rohrs entsprechend einer Wellenlänge eines zu dämpfenden Geräusches geändert wird.

Wenn eine Folie vorgesehen wird, die einen kleinen akustischen Widerstand und einen äußerst großen Widerstand gegen die Luftströmung auf das Offnungsteil des akustischen Rohrs ausübt, ist es möglich, das akustisch weiche Gebiet aus akustischen Rohren aufzubauen, die kürzer als die oben genannten Rohre mit einer Länge sind, die ein Viertel der Wellenlänge beträgt. Wenn nun das Öffnungsteil des akustischen Rohrs mit einer aus Kunststoff oder Ähnlichem gebildeten Folie verschlossen wird, ist es möglich, die Verkleinerung des Kanalschalldämpfers ohne Mühe und auch die Anordnung und die Minderung des Gewichts des Kanalschalldämpfers durchzuführen. Wenn auf diese Weise das offene Rohrende durch die Anordnung der Folie am Öffnungsteil der akustischen Rohre versiegelt wird, ist es möglich, den durch Luft übertragenen Schall, der durch die Luftströmung verursacht wird, zu vermindern, wodurch das geräuschmindernde Frequenzband ausgedehnt wird.

Wenn neben der Bildung des ersten Dämpfungsmittels das akustisch weiche Gebiet, in dem der Schalldruck an der Kanalinnenwandfläche annähernd Null ist, wie oben beschrieben, kontinuierlich bereitgestellt wird, ist es auch möglich, das erste Dämpfungsmittel derart zu bilden, dass das akustisch weiche Gebiet und das akustisch nicht weiche Gebiet, in dem der Schalldruck an der Kanalinnenwandfläche nicht Null ist, abwechselnd über mehr als annähernd eine halbe Wellenlänge einer Schallwelle angeordnet wird, um diese Schallwelle in Längsrichtung des Kanals zu dämpfen, um so ein schachbrettartiges oder ein gestreiftes Muster zu bilden. In diesem Fall sollte der Bereich, der durch das akustisch weiche Gebiet besetzt wird, so aufgebaut werden, dass der Schalldruck der in ihm Null ist, vermindert werden kann, wodurch der Kanalbereich vergrößert wird, in dem der Kanalschalldämpfer angeordnet werden kann.

Vor allem das oben genannte, akustisch nicht weiche Gebiet kann ein schallabsorbierendes, akustisches Gebiet sein, das zur Verminderung eines Schalldrucks dient, der nicht Null ist, wobei ein schallabsorbierendes Glied verwendet wird, wie beispielsweise eine metallische Faser, die aus Glaswolle, Steinwolle und Aluminiumfaser, geschäumtes Aluminium, ein keramisches, absorbierendes Material oder Ähnlichem. Das akustisch feste Gebiet kann aus einem festen Körper, beispielsweise aus einer Metallplatte, auf die gleiche Weise wie ein Kanal gebildet werden, wobei der Körper keine schallmindernde Funktion oder Ähnliches aufweist. Eine Dämpfungsfunktion (geräuschmindernde Funktion) ist in dem akustisch nicht weichen Gebiet keine Voraussetzung. Beispielsweise könnte eine ursprüngliche Kanalwandfläche als akustisch nicht weiches Gebiet verwendet werden. Wenn daher das erste Dämpfungsmittel derart im Kanalinnerem aufgebaut wird, dass das akustisch weiche Gebiet und das akustisch nicht weiche Gebiet abwechselnd gebildet werden, ganz abgesehen davon, dass die zu dämpfende Schallwelle durch die Dämpfungsfunktion des akustisch weichen Gebiets gedämpft werden kann, kann der Kanalschalldämpfer für mehrere Zwecke verwendet werden, wobei von dem akustisch nicht weichen Gebiet, das abwechselnd mit dem akustisch weichen Gebiet angeordnet ist, als akustisch schallabsorbierendes Gebiet oder als akustisch festes Gebiet Gebrauch gemacht wird.

Wenn angenommen wird, dass das oben genannte, akustisch nicht weiche Gebiet ein schallabsorbierendes akustisches Gebiet und das akustisch nicht weiche Gebiet aus einem schallabsorbierenden Glied gebildet ist, beispielsweise aus Fasermaterial, das den Schalldruck vermindern kann, ist es möglich, nicht nur eine Schallwelle, die eine Gegenstandsschallwelle im akustisch weichen Gebiet ist, in einem vorbestimmten Frequenzband, sondern auch eine Schallwelle in einem anderen, vorbestimmten Frequenzband im akustisch nicht weichen Gebiet zu dämpfen. Das Frequenzband in dem Schalldämpfer, in dem die Schallwelle gedämpft werden kann, kann ausgedehnt werden, um die Dämpfungswirkung des Schalldämpfers zu verbessern.

Wenn andererseits, wie schon oben erwähnt, die Wandfläche des Kanals an sich aus einem akustisch nicht weichen Gebiet aufgebaut wird, kann der neuen Struktur vorgebeugt werden, wodurch der Schalldämpfer nur wenig gewichtsbelastet wird.

Auch wenn das akustisch weiche Gebiet aus akustischen Rohren besteht, wird das akustisch nicht weiche Gebiet zwischen den akustischen Rohren, die das akustisch weiche Gebiet aufbauen, gebildet. Auch wenn das akustisch weiche Gebiet von den akustischen Rohren besetzt wird, könnte daher das akustisch nicht weiche Gebiet als offene Flächen gebildet werden, und somit könnten diese offenen Flächen für andere Zwecke verwendet werden. Wenn beispielsweise das akustisch nicht weiche Gebiet als offene Flächen ausgebildet wird, ist es durch Biegung des akustischen Rohrs in dessen Mitte möglich, einen Teil des akustischen Rohrs an einer Stelle anzuordnen, die sich nahe am akustisch nicht weichen Gebiet befindet. In diesem Fall kann die Verkleinerung des Kanalschalldämpfers durchgeführt werden, im Gegensatz zu dem Fall, in dem das akustische Rohr gerade verlängert wird. Demnach kann die Anwendung des Kanalschalldämpfers der vorliegenden Erfindung erweitert werden.

Wenn die oben genannten, akustischen Rohre an den Trennwänden, die das Kanalinnere in eine Vielzahl von kleinen Kanälen aufteilen, eingesetzt werden, ist es möglich, das akustisch weiche Gebiet dadurch zu bilden, dass das offene Rohrende auf der einen Wandfläche der Trennwand angeordnet ist, und das akustisch nicht weiche Gebiet dadurch zu bilden, dass das geschlossene Rohrende auf der anderen Wandfläche der Trennwand angeordnet ist. Aufgrund dieses Aufbaus ist es ausreichend, die Dicke der Trennwand auf die Länge eines akustischen Rohrs zu setzen, und deshalb kann die Trennwand dünn ausgebildet werden. Auch wenn der Kanal durch Trennwände aufgeteilt ist, kann daher ein Kanalbereich, den die Trennwände im Querschnitt besetzen, so viel wie möglich verkleinert werden, wodurch die Gegenstandsschallwelle gedämpft werden kann, ohne dass die Luftströmung im Kanalinnerem vermindert wird.

Andererseits kann ein schallabsorbierendes Gebiet, das aus einem ersten Dämpfungsmittel gebildet ist, aus einem schallabsorbierenden Glied bestehen, beispielsweise aus einer metallischen Faser, die vorzugsweise aus Glaswolle, Steinwolle und aus Aluminiumfaser, geschäumten Aluminium, einem keramischen, absorbierenden Material oder Ähnlichem besteht. Wenn das schallabsorbierende Gebiet mit diesem schallabsorbierenden Glied gebildet ist, ist es möglich, die Schallwelle in einem ausgedehnten Frequenzband, genauer gesagt in einem Hochfrequenzband, zu dämpfen. Durch die Anwendung eines Nichffasermaterials, beispielsweise eines keramischen, absorbierenden Materials, für das schallabsorbierende Glied, ist es möglich, einen Nachteil zu vermeiden, der mit der Auflösung des Materials verbunden ist und der als ein herkömmliches, zu bewältigendes Problem angesehen wird.

Nachstehend werden bestimmte Ausführungen des Kanalschalldämpfers in Zusammenhang mit den Figuren erläutert.

Fig. 12 zeigt einen ersten Kanalschalldämpfer A11, der eine erste Ausführung des Kanalschalldämpfers darstellt.

Der erste Kanalschalldämpfer A11 ist ein Kanalschalldämpfer, der für einen Versuch gedacht ist, um das Dämpfungsvermögen des Kanalschalldämpfers zu messen. Der erste Kanalschalldämpfer A11 besteht aus einem Paar linker und rechter, erster akustischer Rohrreihen 37, die das erste Dämpfungsmittel bilden, und aus einem Paar oberer und unterer schallabsorbierender Glieder 33, die das zweite Dämpfungsmittel bilden. Der erste Kanalschalldämpfer A11 ist in einer zylinderförmigen Form mit einem Innenraum gebildet, der einen rechteckförmigen Querschnitt von 10x10cm und eine Länge von 50cm aufweist.

Die oben genannte, erste akustische Rohrreihe 37 ist derart ausgebildet, dass die mehrfachen akustischen Rohre in senkrechter und/oder waagerechter Richtung in einer Reihe liegen und die aus Aluminium gebildeten, akustischen Rohre 1 (ein akustisches Rohr mit einer Länge, die ein Viertel der Wellenlänge beträgt) mit einem Querschnitt von 5x5 cm und einer Länge von 85 mm, die ein Viertel einer 1000 Hz-Wellenlänge ausmacht, nebeneinander in zwei Reihen und zehn Spalten angeordnet sind. Die erste Rohrreihe ist derart angeordnet, dass eine Fläche b (nachstehend als Grenzfläche bezeichnet) mit dem Innenraum des Kanals D' eine Grenze bildet, d. h., dass die Innenwandfläche des Kanals D' zum Öffnungsteil der ersten akustischen Rohrreihe 31 wird.

Das schallabsorbierende Glied 33 ist aus plattenförmiger Glaswolle mit einer Dicke von 50 mm und einer Dichte von 32 kg/m³ gebildet und bildet ein schallabsorbierendes Gebiet 33, das sich zu einem Innenraum des Kanals D' erstreckt. Ferner ist ein äußerer Zusatzteil des schallabsorbierenden Glieds 33, der nicht dem Innenraum des Kanals D3 gegenüberliegt, mit einem aus einer Acrylplatte gebildeten Gehäuse 14 mit einer Dicke von 20 mm bedeckt, wodurch dem Auslaufen der Geräusche aus dem Inneren des Kanals D' in das Äußere des Kanals D' und gleichzeitig auch dem Eindringen von Geräuschen von außerhalb des Kanals D' in das Innere des Kanals D' vorgebeugt wird.

Fig. 13 zeigt einen zweiten Schalldämpfer A12, der eine zweite Ausführung bildet.

Der zweite Kanalschalldämpfer A12 ist auch ein Versuchs-Kanalschalldämpfer, dessen Entwurf auf der Voraussetzung beruht, dass das Dämpfungsvermögen des Schalldämpfers A12 gemessen wird und sich von dem oben genannten, ersten Kanalschalldämpfer A11 nur hinsichtlich des Aufbaus der akustischen Rohrreihe unterscheidet. Das heißt, dass beim zweiten Kanalschalldämpfer A12, darunter die akustischen Rohre 31 der ersten akustischen Rohrreihe 37, Öffnungsteile der akustischen Rohre 31 der oben genannten, ersten akustischen Rohrreihe 37 mit einem festen Körper 32, beispielsweise einer Aluminiumplatte, in einem schachbrettartigen Muster derart geschlossen sind, dass sich die angrenzenden, akustischen Rohre 31 nicht kontinuierlich öffnen, und gleichzeitig bildet die zweite akustische Rohrreihe 38, die aus Glaswolle besteht, das schallabsorbierende Glied 33 am festen Körper.

Auf diese Weise wird im ersten Kanalschalldämpfer A11 und auch im zweiten Kanalschalldämpfer A12 die akustische Rohrreihe dadurch gebildet, dass die zu dämpfende Frequenz auf 1000 Hz gesetzt wird, wobei die erste akustische Rohrreihe 37 des ersten Kanalschalldämpfers A11 eine gemeinsame Grenzfläche b hat, die in ein akustisch weiches Gebiet 34 über eine halbe Wellenlänge der Gegenstandsdämpfungsfrequenz gebildet ist, während die zweite akustische Rohrreihe 38 des zweiten Kanalschalldämpfers A12 eine Grenzfläche b aufweist, die aus dem akustisch weichen Gebiet 34 und dem akustisch nicht weichen Gebiet 35 in einem schachbrettartigen Muster über eine halbe Wellenlänge der Gegenstandsdämpfungsfrequenz gebildet ist.

Bei dem oben genannten ersten Kanalschalldämpfer A11 und zweiten Kanalschalldämpfer A12 sind die akustischen Rohre 31 aus Aluminium und die schallabsorbierenden Glieder 33 aus Glaswolle hergestellt. Allerdings werden der erste Kanalschalldämpfer A11 und der zweite Kanalschalldämpfer A12 ausschließlich als Versuchs-Kanaldämpfungsvorrichtungen zur Verfügung gestellt. Das heißt, dass sich die Kanalschalldämpfer nicht nur auf diese Materialien beschränken und auch Materialien verwendet werden können, die sich für den Aufbau des akustisch weichen Gebiets 34 und des schallabsorbierenden Gebiets 36 eignen. Die Form des akustischen Rohrs 31 beschränkt sich nicht nur auf einen rechteckförmigen Querschnitt; das Rohr 31 kann auch eine beliebige Querschnittsform, beispielsweise eine zylinderförmige Form aufweisen. Der Aufbau der akustischen Rohrreihe und die Dicke des schallabsorbierenden Glieds 33 könnte auch richtig angepasst werden. Ferner könnten beim zweiten Kanalschalldämpfer A12 zwei gegenüberliegende akustische Rohrreihen 38 derart gebildet werden, dass sich die akustisch weichen Gebiete 34 gegenüberliegen und sich die akustisch nicht weichen Gebiete 35 gegenüberliegen, oder die akustische Rohrreihe 38 könnte auf in solcher Weise aufgebaut werden, dass sich das akustisch weiche Gebiet 34 und das akustisch nicht weiche Gebiet 35 gegenüberliegen.

Der oben genannte erste Kanalschalldämpfer A11 und der zweite Kanalschalldämpfer A12 werden bezüglich des Dämpfungsvermögens mit einem Kanalschalldämpfer' verglichen, der nur mit dem ersten Dämpfungsmittel versehen ist und einem Kanalschalldämpfer, der nur mit dem zweiten Dämpfungsmittel versehen ist.

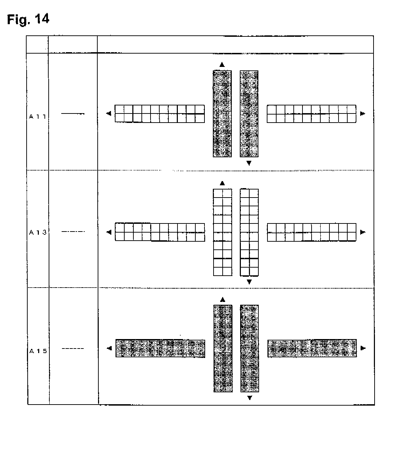

Fig. 14 zeigt die Grenzflächenstruktur des ersten Kanalschalldämpfers A11, die Grenzflächenstrukturen des dritten Kanalschalldämpfers A13 und des fünften Kanalschalldämpfers A15, die Beispiele zum Vergleich mit dem zweiten Kanalschalldämpfer A12 dienen. Der dritte Kanalschalldämpfer A13 ist so aufgebaut, dass die erste akustische Rohrreihe 37, die das erste Dämpfungsmittel bildet, an demjenigen Teil angeordnet ist, an dem das schallabsorbierende Glied 33, das das zweite Dämpfungsmittel bildet, am ersten Kanalschalldämpfer A11 vorgesehen ist, wodurch alle vier Flächen, die dem Innenraum des Kanals D' gegenüberliegen, gebildet werden, die nur das erste Dämpfungsmittel anwenden. Der fünfte Kanalschalldämpfer A15 ist derart aufgebaut, dass das schallabsorbierende Glied 33, das das zweite Dämpfungsmittel bildet an den Teilen angeordnet ist, an denen die erste akustische Rohrreihe 37, die das erste Dämpfungsmittel in dem oben genannten ersten Kanalschalldämpfer A11 bilden, vorgesehen sind, wodurch alle vier Flächen, die dem Innenraum des Kanals D' gegenüberliegen, gebildet werden, die nur das zweite Dämpfungsmittel anwenden.

Fig. 14 zeigt die Grenzflächenstruktur des zweiten Kanalschalldämpfers A12, die Grenzflächenstrukturen des vierten Kanalschalldämpfers A14 und des fünften Kanalschalldämpfer A15, die als Beispiele zum Vergleich mit dem zweiten Kanalschalldämpfer A12 dienen. Der vierte Kanalschalldämpfer A14 ist so aufgebaut, dass die zweite akustische Rohrreihe 38, die das erste Dämpfungsmittel bildet, an demjenigen Teil angeordnet ist, an dem das schallabsorbierende Glied 33, das das zweite Dämpfungsmittel bildet, in dem zweiten Kanalschalldämpfer A12 vorgesehen ist, wodurch alle vier Flächen, die dem Innenraum des Kanals D' gegenüberliegen, gebildet werden, die nur das erste Dämpfungsmittel anwenden. Der fünfte Kanalschalldämpfer A15 ist derart aufgebaut, dass das schallabsorbierende Glied 33, das das zweite Dämpfungsmittel bildet, an denjenigen Teilen angeordnet ist, an denen die zweite akustische Rohrreihe 38, die das erste Dämpfungsmittel im oben genanntem zweiten Kanalschalldämpfer A12 bildet, vorgesehen ist, wodurch alle vier Flächen, die dem Innenraum des Kanals D' gegenüberliegen, gebildet werden, die nur das zweite Dämpfungsmittel anwenden, wie es im Zusammenhang mit der Fig. 14 erläutert wurde.

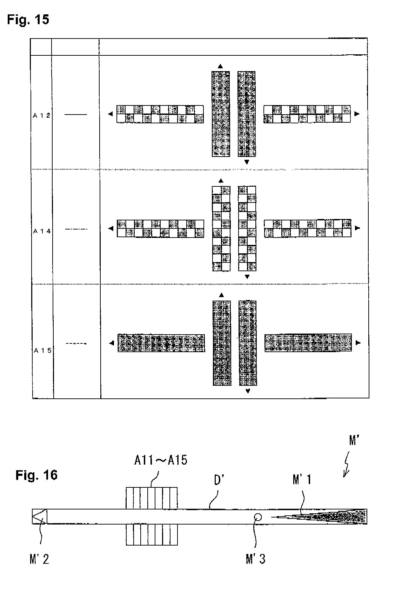

In Fig. 16 wird eine Messvorrichtung M' gezeigt, die das Dämpfungsvermögen des oben genannten ersten bis fünften Kanalschalldämpfer A11 bis A15 misst.

Die Messvorrichtung M' besteht aus einem aus Acrylharz gebildeten Kanal D', der eine quadratische Querschnittsform von 10x10cm und eine Länge von 2m aufweist. Ein Endteil des Kanalendes D' ist durch ein nicht reflektierendes Ende gebildet, an dem ein schallabsorbierender Keil M'1 angeordnet ist. Ein Lautsprecher M'2, der eine Schallquelle darstellt, ist an einem Anfangs-Ende-Teil des Kanals D' gegenüber dem nicht reflektierenden Endteil angebracht, und ein Mikrofon M'3, das das ausgegebene Geräusch aus dem Lautsprecher M'2 aufnimmt, ist vor dem schallabsorbierenden Keil M'1 angeordnet, der näher als der Lautsprecher M'2 zu dem nicht reflektierenden Ende liegt.

Zwischen dem Lautsprecher M'2 und dem Mikrofon M'3, d. h. am Mittelteil des Kanals D', der näher als der Lautsprecher M'2 zu dem nicht reflektierenden Ende liegt, sind die zu prüfenden ersten bis fünften Kanalschalldämpfer A11 bis A15 angeordnet, und deshalb kann gemessen werden, wie viele Geräusche, die aus dem Lautsprecher M'2 ausgegeben werden, beim Durchlaufen des Kanalschalldämpfers gedämpft werden. Ein in den Figuren 14 und 15 dargestelltes, volles Dreieck zeigt die Richtung der Anfangs-Ende-Seite (die Seite, an der der Lautsprecher M2 angeordnet ist) des Kanals D zum Zeitpunkt der Befestigung des Kanalschalldämpfers an der Messvorrichtung M' an.

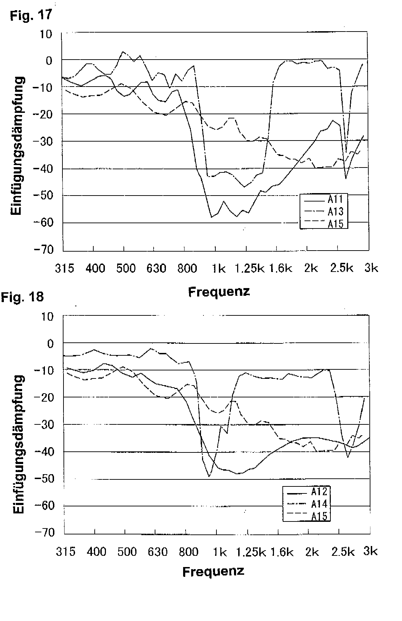

Fig. 17 zeigt ein Messergebnis des Dämpfungsvermögens des oben genannten ersten Kanalschalldämpfers A11, des dritten Kanalschalldämpfers A13 und des fünften Kanalschalldämpfers A15, die ein Vergleichsbeispiel zum ersten Kanalschalldämpfer A11 sind. In Fig. 17 zeigt eine Y-Achse die Schallvolumen (in dB) der Schallwellen, die aufgenommen werden, wenn das jeweilige Dämpfungsvermögen der Kanalschalldämpfer A11, A13 und A15 mit einem Bezugswert verglichen wird, wobei das Volumen einer Schallwelle, die von einem Mikrofon M'3 aufgenommen wird, wenn der erste Schalldämpfer A11 nicht vorhanden ist und alle Innenwandflächen des Kanals D' aus einem festen Körper 32 gebildet werden. Die X-Achse zeigt die Frequenz (in Hz) der Schallwelle an, die vom Mikrofon M'3 innerhalb eines Bereichs von 315-3000 Hz aufgenommen wird.

Eine durchgezogene Linie, wie sie in Fig. 14 dargestellt ist, zeigt ein Messergebnis des ersten Schalldämpfers A11. Diese Linie lässt darauf schließen, dass eine große Verminderung des Dämpfungsvermögens von 40 dB oder mehr in einem Frequenzband von ungefähr 800-1800 Hz erzielt wird, mit 1000 Hz als Mitte des Frequenzbands, die die vorgesehene Frequenz für das akustische Rohr 31 mit einer Länge ist, die ein Viertel einer Wellenlänge beträgt. Die Dämpfungswirkung wird in einem relativ ausgedehnten Frequenzband erzielt, das eine Oktave umfasst.

Andererseits zeigt eine strichpunktierte Linie, wie sie in Fig. 14 dargestellt ist, ein Messergebnis des dritten Schalldämpfers A13, der nur aus der ersten akustischen Rohrreihe 37 besteht. Ein Vergleich des Messergebnisses des dritten Kanalschalldämpfers A13 mit dem Messergebnis des ersten Kanalschalldämpfers A11 lässt erkennen, dass in fast allen Frequenzbändern kann der oben genannte erste Kanalschalldämpfer A11 eine größere Verminderung des Dämpfungsvermögens erzielen kann. Vor allem auf der hohen Frequenzbandseite über 1600 Hz vergrößert sich der Unterschied der Dämpfungswirkung.

Eine punktierte Linie, wie in Fig. 14 dargestellt, zeigt ein Messergebnis des fünften Kanalschalldämpfers A15, der nur aus dem schallabsorbierenden Glied 33 besteht. Beim Vergleich des Messergebnisses des fünften Kanalschalldämpfers A15 mit dem Messergebnis des ersten Kanalschalldämpfers A11 ist erkennbar, dass der erste Kanalschalldämpfer A11 eine äußerst große Verminderung des Dämpfungsvermögens innerhalb des Bereichs von 800-1900 Hz im Vergleich zu dem oben genanntem ersten Kanalschalldämpfer A11 erzielen kann.

Auf diese Weise kommt es vor, dass der erste Kanalschalldämpfer A11, bei dem die Dämpfungsmittel, die sich voneinander in ihrer Dämpfungseigenschaft unterscheiden, auf zwei Paaren sich gegenüberliegender Innenwandflächen des Kanals D' mit rechteckförmigen Querschnitt angeordnet sind, eine hohe Dämpfungswirkung innerhalb des ausgedehnten Frequenzbands im Vergleich zu dem dritten Kanalschalldämpfer A13 und dem fünften Kanalschalldämpfer A15 erzielen kann, bei denen die Dämpfungsmittel mit der gleichen Dämpfungseigenschaft an zwei Paaren sich gegenüberliegender Innenwandflächen des Kanals D' angeordnet sind.

Fig. 18 zeigt das Messergebnis des Dämpfungsvermögens des oben genannten ersten Kanalschalldämpfers 12 und der Dämpfungsfähigkeiten des dritten Kanalschalldämpfer A14 und des fünften Kanalschalldämpfer A15, die Vergleichsbeispiele zum ersten Kanalschalldämpfer A12 sind. In Fig. 18 zeigt die Y-Achse wie in Fig. 17 die Schallvolumen (in dB) der Schallwellen an, die aufgenommen werden, wenn das Dämpfungsvermögen des jeweiligen Kanalschalldämpfers A12, A14 und A15 mit einem Bezugswert verglichen wird. Die X-Achse zeigt die Frequenz (in Hz) der Schallwelle an, die vom Mikrofon M'3 innerhalb eines Bereichs von 315-3000 Hz aufgenommen wird.

Eine durchgezogene Linie, wie sie in Fig. 15 dargestellt ist, zeigt ein Messergebnis des ersten Kanalschalldämpfers A12. Diese Linie lässt darauf schließen, dass ein großes Dämpfungsvermögen von 40 dB oder mehr in einem Frequenzband von ungefähr 900-1600 Hz erzielt wird, mit 1000 Hz als Mitte des Frequenzbands, die die vorgesehene Frequenz für das akustische Rohr 31 mit einer Länge ist, die ein Viertel einer Wellenlänge beträgt. In einem Frequenzband über ungefähr 800 Hz wird ein Dämpfungsvermögen von 30 dB oder mehr immer erzielt. Um dieses Ergebnis mit dem Ergebnis des ersten Kanalschalldämpfers A11 zu vergleichen, obgleich das Frequenzband, in dem das Dämpfungsvermögen 40 dB beträgt, etwas schmal ist, kann der Schalldämpfer A12 ein Dämpfungsvermögen von 30 dB oder mehr oder beständiger als der erste Kanalschalldämpfer A11 in dem Hochfrequenzband von 2000 Hz oder mehr erzielen.

Andererseits zeigt eine strichpunktierte Linie, wie sie in Fig. 15 dargestellt ist, ein Messergebnis des dritten Kanalschalldämpfers A14, der nur aus der zweiten akustischen Rohrreihe 38 besteht. Bei einem Vergleich des Messergebnisses des dritten Kanalschalldämpfers A14 mit dem Messergebnis des zweiten Kanalschalldämpfers A12 ist erkennbar, dass in fast allen Frequenzbändern der oben genannte zweite Kanalschalldämpfer A12 eine größere Verminderung des Dämpfungsvermögens erzielen kann.

Eine punktierte Linie, wie sie in Fig. 14 dargestellt ist, zeigt ein Messergebnis des fünften Kanalschalldämpfers A15, der nur aus dem schallabsorbierenden Glied 33 besteht. Bei einem Vergleich des fünften Kanalschalldämpfers A15 mit dem zweiten Kanalschalldämpfer A12 auf die gleiche Weise wie mit dem ersten Kanalschalldämpfer A12 ist erkennbar, dass der zweite Kanalschalldämpfer A12 mit der vorgesehenen Frequenz des akustischen Rohrs 31 mit einer Länge, die ein Viertel einer Wellenlänge beträgt, umso mehr eine Verminderung des Dämpfungsvermögens über einer Oktave erzielen kann.

Auf diese Weise kommt es auch vor, dass der zweite Kanalschalldämpfer A12, bei dem die zweite akustische Rohrreihe 38, in der das akustisch weiche Gebiet 34 und das akustisch nicht weiche Gebiet 35 in einem schachbrettartigen Muster angeordnet sind, als das erste Dämpfungsmittel verwendet wird, eine hohe Dämpfungswirkung innerhalb des ausgedehnten Frequenzbands im Vergleich zum vierten Kanalschalldämpfer A14 und zum fünften Kanalschalldämpfer A15 erzielen kann, bei denen Dämpfungsmittel mit der gleichen Dämpfungseigenschaft an zwei Paaren gegenüberliegender Innenwandflächen des Kanals D' mit rechteckförmigem Querschnitt angeordnet sind.

Als nächstes wird ein anderes Beispiel erläutert, bei dem der Kanalschalldämpfer als Kammertyp-Kanalschalldämpfer ausgebildet ist.

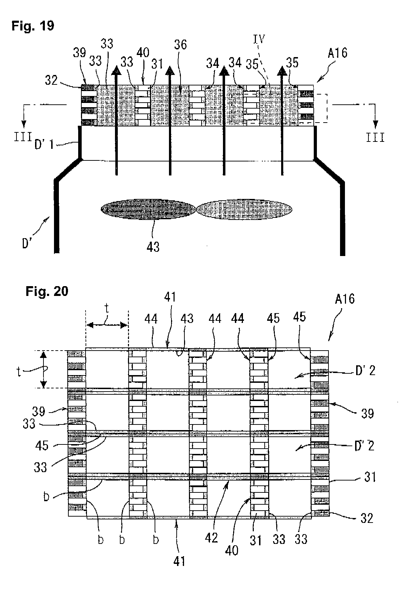

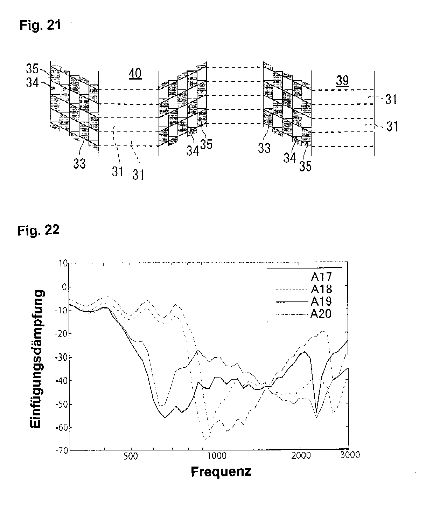

In Fig. 19 ist ein Querschnitt eines sechsten Kanalschalldämpfers A16 in dessen Betriebszustand dargestellt. Fig. 20 stellt einen Querschnitt gemäß der Linie III-III in Fig. 19 dar, und Fig. 21 ist eine erläutende Ansicht, die die Anordnung des akustisch weichen Gebiets 34 und des akustisch nicht weichen Gebiets 35 in einem Bereich IV in Fig. 19 zeigt.

Wie in diesen Figuren dargestellt ist, ist der sechste Kanalschalldämpfer A16 an einer Saugöffnung D'1 des Kanals D angeordnet, der einen rechteckförmigen Querschnitt aufweist und einen Kühlturm für eine Klimaanlage bildet. Der sechste Kanalschalldämpfer A16 ist aus akustischen Rohrreihen für Kanalwände 39, die als erstes Dämpfungsmittel an einem Paar links bzw. rechts gegenüberliegender Innenwandflächen des Kanals D' angeordnet sind, und aus akustischen Rohrreihen für Kanalwände 41 gebildet, die als zweites Dämpfungsmittel auf der Vorderseite bzw. auf der Rückseite des Kanals D' an einem Paar von Innenwandflächen des Kanals D' angeordnet sind. Der Kanalschalldämpfer A16 weist eine zylinderförmige Form mit rechteckförmigem Querschnitt auf. Im Inneren des sechsten Kanalschalldämpfers A16 sind drei akustische Rohrreihen 40, die von Trennwänden zu Längstrennwänden werden, die den Kanal D' in Längsrichtung aufteilen, als erstes Dämpfungsmittel und drei schallabsorbierende Körper 42, die von Trennwänden zu seitlichen Trennwänden werden, die den Kanal D' in seitlicher Richtung aufteilen, als zweites Dämpfungsmittel angeordnet. Folglich wird im Inneren des Kanals D' eine Vielzahl von kleinen Kanälen mit rechteckförmigem Querschnitt gebildet. In der Fig. 19 bezeichnet die Bezugsziffer 43 einen Ventilator.

Die oben genannten, akustischen Rohrreihen 39 für Trennwände weisen eine Plattenform auf, wobei die aus Aluminium gebildeten, akustischen Rohre 39 mit einer Länge, die ein Viertel einer Wellenlänge beträgt, und mit einer rechteckförmigen Querschnittsform und einem geschlossenem Ende ausgebildet sind. Ein anderes offenes Ende liegt parallel zur Kanalwand in senkrechter und waagerechter Richtung. Gleichzeitig sind die Öffnungen des akustischen Rohrs 31 abwechselnd durch feste Körper 32, wie beispielsweise durch Aluminiumplatten, verschlossen, und die aus Glaswolle gebildeten, schallabsorbierenden Glieder 33 sind am festen Körper 32 derart befestigt, dass das verschlossene Ende oder das offene Ende nicht kontinuierlich zwischen den zwei angrenzenden, akustischen Rohren 31 mit einer Länge, die ein Viertel der Wellenlänge beträgt, angeordnet ist. Wie in Fig. 21 dargestellt ist, bestehen Grenzflächen b, die mit dem Innenraum des Kanals D' eine Grenze bilden, d, h. Grenzflächen, die Innenwandflächen des Kanals D' sind, aus Öffnungen (das akustisch weiche Gebiet 34) der akustischen Rohre 31 und aus schallabsorbierenden Gliedern 33 (das akustisch nicht weiche Gebiet 35), die an die festen Körper 32 in einem schachbrettartigen Muster befestigt sind.

Andererseits ist die akustische Rohrreihe 40 für eine Trennwand in Plattenform gebildet, wobei die aus Aluminium gebildeten, akustischen Rohre 31 mit einer Länge, die ein Viertel einer Wellenlänge beträgt, und mit einer rechteckförmigen Querschnittsform und einem geschlossenem Ende abwechselnd versehen sind. Ein anderes offene Ende ist parallel in senkrechter und waagerechter Richtung derart angeordnet, dass das geschlossene Ende oder das offene Ende nicht kontinuierlich zwischen den zwei angrenzenden, akustischen Rohren 31 mit einer Länge, die ein Viertel der Wellenlänge beträgt, angeordnet sind. Bei diesem AusfOhrungsbeispiel bildet die akustische Rohrreihe 40 für eine Trennwand unter den gegebenen Umständen eine Längstrennwand.

Das heißt, dass die akustische Rohrreihe 40 für eine Trennwand derart ausgebildet ist, dass beide vorderen bzw. hinteren Flächen Grenzflächen b sind, die mit dem Innenraum des Kanals D' eine Grenze bilden, und dass das akustische Rohr 31, dessen Öffnungsteil an der einen Grenzfläche b angeordnet ist, derart ausgebildet ist, dass das geschlossene Teil an der anderen Grenzfläche b angeordnet ist. Das aus Glaswolle gebildete, schallabsorbierende Glied 33 ist an dem oben genannten, geschlossenem Teil befestigt, und das Öffnungsteil (das akustisch weiche Gebiet 34) des akustischen Rohrs 31 und die schallabsorbierenden Glieder 33 (akustisch nicht weiche Gebiet 35) des geschlossenen Teils sind auf der Grenzfläche b, b der beiden vorderen bzw. hinteren Seiten der akustischen Rohrreihe 40 für eine Trennwand gemäß Fig. 21 in einem schachbrettartigen Muster gebildet.

Die oben genannte, akustische Rohrreihe 39 für eine Kanalwand und die akustische Rohrreihe 40 für eine Trennwand sind über die Länge, die eine halbe Wellenlänge oder weniger einer zu dämpfenden Schallwelle beträgt, in Längsrichtung des Kanals D' angeordnet.

Bei dem schallabsorbierende Körper der Kanalwand 41 ist das aus Glaswolle gebildete, schallabsorbierende Glied 33 so angeordnet, dass es gegenüber dem Innenraum des Kanals D' liegt, und gleichzeitig ist die Körperaußenseite mit einem aus Aluminiumplatte oder Ähnlichem gebildeten Gehäuse 44 bedeckt.

Andererseits ist an der Trennwand des schallabsorbierenden Körpers 42 das schallabsorbierende Glied 33 an beiden Flächen eines aus Aluminiumplatte oder Ähnlichem gebildeten Rahmens 45 angeordnet, wodurch schallabsorbierende Gebiete 36 an beiden vorderen bzw. hinteren Flächen gebildet werden, wobei der schallabsorbierende Körper 42 der Trennwand an sich direkt eine seitliche Trennwand bildet. Aufgrund des schallabsorbierenden Körpers 42 der Trennwand, der eine seitliche Trennwand bildet, und der oben genannten, akustischen Rohrreihe 40, die die Längstrennwand bildet, wird eine Öffnungsweite t des Kanals D' derart aufgeteilt, dass die Öffnungsweite t zur einer halben Wellenlänge oder weniger einer Gegenstandsschallwelle wird.

Auch im oben genannten, sechsten Kanalschalldämpfer A16 ist das erste Dämpfungsmittel an einem Paar sich gegenüberliegender Innenwandflächen des verkleinerten Kanals D'2 mit rechteckförmigem Querschnitt angeordnet, und die Schalldämpfungsmittel sind an einem anderen Paar sich gegenüberliegender Innenwandflächen des verkleinerten Kanals D'2 mit rechteckförmigen Querschnitt angeordnet. Deshalb ist es möglich, die Geräusche, die sich durch das Innere des Kanals D' verbreiten, über ein ausgedehntes Band, das sich von dem Niederfrequenzband bis zum Hochfrequenzband erstreckt, zu dämpfen, zumal bei dem Kanalschalldämpfer A16 das Öffnungsteil des akustischen Rohrs 31 aus dem akustisch weichen Gebiet 34 und gleichzeitig das geschlossene Teil aus dem akustisch nicht weichen Gebiet 35 besteht und in der senkrechten Trennwand (akustische Rohrreihe 40 für eine Trennwand) das akustische Rohr 31, das an einer Grenzfläche b das akustisch weiche Gebiet 34 bildet, das akustisch nicht weiche Gebiet 35 an einer anderen Grenzfläche b bildet.

Da Geräusche absorbiert werden können, indem ein schallabsorbierendes Glied 33 an das akustisch nicht weiche Gebiet 35 befestigt wird und indem zusätzlich zu dem Frequenzband, das durch das akustisch weiche Gebiet 34 gedämpft werden kann, ein anderes Frequenzband im akustisch nicht weichen Gebiet 35 gedämpft werden kann, wird ein Kanalschalldämpfer erzielt, der eine hohe Dämpfungswirkung aufweist. Der oben genannte Kanalschalldämpfer ist bei allen Kanälen D' anwendbar, die an Stellen angeordnet sind, die Geräusche dämpfen müssen, beispielsweise an einer Außeneinrichtung einer Klimaanlage, an einer großen, mit Seiten versehenen Tunnelentladungsvorrichtung, an einer stromerzeugungsvorrichtung oder an dem bereits oben genannten Kühlturm für die Klimaanlage.

Fig. 22 zeigt ein Versuchsergebnis, das die vorteilhaften Auswirkungen bestätigt, wenn eine Folie an das Öffnungsteil des akustischen Rohrs angebracht wird.

In Fig. 22 zeigt eine gestrichelte Linie (durch A17 in der Figur angegeben) das Messergebnis, wenn Glaswolle (Dicke 50 mm, Dichte 32 kg/m³) zu einem Paar sich gegenüberliegender Kanalinnenwandflächen mit einem rechteckförmigen Querschnitt laminiert ist und die akustischen Arten an einem anderen Paar von Kanalinnenwandflächen angeordnet sind, wodurch sie das akustisch weiche Gebiet bilden; eine punktierte Linie (durch A18 in der Figur angegeben) zeigt ein Messergebnis, wenn Glaswolle (Dicke 25 mm, Dichte 64 kg/m³) auch an das oben genannte, akustisch weiche Gebiet laminiert ist; eine dick ausgezogen Linie (durch A19 in der Figur angegeben) zeigt ein Messergebnis, wenn das Öffnungsteil des akustischen Rohrs des Kanals mit einem dünnen Film (Dicke 50 µm) beschichtet wird, angegeben mit A17 durch die oben genannte, unterbrochene Linie ohne Spannung; eine dünn ausgezogene Linie (durch A20 in der Figur angegeben) zeigt das Messergebnis, wenn das Öffnungsteil des akustischen Rohrs des Kanals mit einem dünnen Film (Dicke 50 µm) beschichtet wird, angegeben mit A18 durch die oben genannte, punktierte Linie ohne Spannung.

In Fig. 22 wird durch Vergleich von A17 und A19 oder A18 und A20 in beiden Fällen bestätigt, dass bei der Beschichtung des akustisches Rohrs mit einer dünnen Folie die Frequenz mit der hohen Dämpfungswirkung auf die Niederfrequenzseite umgestellt wird und gleichzeitig die Dämpfungswirkung auch im Hochfrequenzband erzielt werden kann.

Auf diese Weise wird die Frequenz mit der hohen Dämpfungswirkung auf die Niederfrequenzseite umgestellt, wobei das Öffnungsteil des akustischen Rohrs mit einer dünnen Folie beschichtet wird, und deshalb ist zu verstehen, dass es bei der Anordnung der dünnen Folie am Öffnungsteil des akustischen Rohrs möglich ist, die gewünschte Dämpfungswirkung durch die Anwendung eines akustischen Rohrs mit einer Länge, die sich von einem offenen Rohrende zu einem geschlossenen Rohrende erstreckt, das auf einem Viertel der Wellenlänge einer zu dämpfenden Schallwelle gesetzt ist, zu erzielen. Das heißt, wenn die Wellenlängen der zu dämpfenden Schallwellen gleich sind, kann die Länge des akustischen Rohrs bei der Anordnung der Folie am Öffnungsteil des akustischen Rohrs verkürzt werden, wodurch eine Verkleinerung und Verminderung des Schalldämpfers erreicht werden können.

Weiter ist es möglich, die Dämpfungswirkung auch im Hochfrequenzband zu erzielen, wenn das Öffnungsteil des akustischen Rohrs mit einer dünnen Folie beschichtet wird, und daher ist es zu verstehen, dass das Frequenzband, das die Dämpfungswirkung des Schalldämpfers aufweist, erhöht werden kann, wenn die Folie am Öffnungsteil des akustischen Rohrs angebracht wird.

Gemäß der vorliegenden Erfindung sind auf einer Fläche der Kanalinnenwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet, um diese Schallwelle in Längsrichtung des Kanals zu dämpfen, und deshalb ist es möglich, den Bereich, der von dem akustisch weichen Gebiet besetzt wird, das in bestimmter Weise aufgebaut sein muss, mit einem Schalldruck, der Null ist, zu vermindern und folglich den Bereich in dem Kanal zu erweitern, in dem der Kanalschalldämpfer befestigt werden kann.

Der Kanal ist durch Trennwände derart unterteilt, dass eine Öffnungsweite eine halbe Wellenlänge oder weniger einer zu dämpfenden Schallwelle beträgt, und dass auf beiden Seitenflächen der Trennwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet sind, um diese Schallwelle in Längsrichtung des Kanals zu dämpfen, und deshalb ist es möglich, einen Bereich, der von dem akustisch weichen Gebiet besetzt wird, das auf bestimmte Weise aufgebaut sein muss, mit einem Schalldruck, der Null ist, zu vermindern, wobei ein Bereich, der in der Lage ist, einen Kanalschalldämpfer in der Trennwand zu befestigen, vergrößert werden kann.

Ferner wird das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist, und daher ist es möglich, Geräusche verschiedener Wellenlängen zu dämpfen, indem die Länge des akustischen Rohrs entsprechend der Wellenlänge des zu dämpfenden Geräusches geändert wird. Insbesondere befindet sich das akustisch nicht weiche Gebiet zwischen dem akustischem Rohr und dem akustischen Rohr, das das akustisch weiche Gebiet bildet. Demzufolge ist es, auch wenn das akustisch weiche Gebiet mit dem akustischem Rohr besetzt wird, unnötig, das akustische Rohr in dem oben genannten, akustisch nicht weichen Gebiet anzuordnen, wobei die Lücke für andere Zwecke verwendet werden kann.

Ferner ist das akustisch weiche Gebiet dadurch gebildet, dass das offene Rohrende auf der einen Wandfläche der Trennwand angeordnet ist, und das akustisch nicht weiche Gebiet ist dadurch gebildet, dass das geschlossene Rohrende auf der anderen Wandfläche der Trennwand angeordnet ist. Deshalb kann es ausreichend sein, die Dicke der Trennwand auf die Länge eines akustischen Rohrs zu setzen, wobei die Trennwand dünn ausgebildet sein kann. Demzufolge kann, auch wenn der Kanal durch die Trennwände unterteilt ist, ein Kanalbereich, den die Trennwände im Querschnitt des Kanals besetzen, so viel wie möglich vermindert werden, und daher kann der Kanal wirksam verwendet werden.

Ferner ist das akustisch nicht weiche Gebiet durch ein schallabsorbierendes Glied gebildet, das den Schalldruck vermindert, und darum ist es möglich, eine Schallwelle in einem vorbestimmten Frequenzband in dem akustisch weichen Gebiet und gleichzeitig eine Schallwelle in einem anderen, vorbestimmten Band in dem akustisch nicht weichen Gebiet zu dämpfen. Dementsprechend kann das Frequenzband, in dem die Schallwelle im Schalldämpfer gedämpft werden kann, ausgedehnt werden und somit die Dämpfungswirkung des Schalldämpfers erhöhen.

Ferner ist ein erstes Dämpfungsmittel auf dem einen Paar aus Innenwandflächen von zwei Paaren sich gegenüberliegender Innenwandflächen eines Kanals mit rechteckförmigem Querschnitt befestigt. Ein zweites Dämpfungsmittel, das eine von der des ersten Dämpfungsmittels unterschiedliche Dämpfungseigenschaft aufweist, ist auf dem anderen Paar aus Innenwandflächen befestigt, und daher können die Schallwellen in unterschiedlichen Frequenzbändern mit dem ersten Dämpfungsmittel und dem zweiten Dämpfungsmittel gedämpft werden, wodurch das Frequenzband, das gedämpft werden kann, ausgedehnt wird.

Ferner bildet das erste Dämpfungsmittel das akustisch weiche Gebiet, wobei der Schalldruck an der Kanalinnenwandfläche annähernd Null ist, über mehr als annähernd eine halbe Wellenlänge einer Schallwelle oder mehr, um diese Schallwelle in Längsrichtung des Kanals zu dämpfen. Das zweite Dämpfungsmittel bildet das schallabsorbierende Gebiet, das den Schalldruck einer zu dämpfenden Schallwelle auf der Innenwandfläche vermindert, und deshalb kann die Schallwelle des exklusiven Frequenzbands, die den Hauptbestandteil des Geräusches bildet, mit dem ersten Dämpfungsmittel gedämpft werden, und gleichzeitig kann auch die Schallwelle des ausgedehnteren Frequenzbands, das nicht mit dem ersten Dämpfungsmittel gedämpft ist, durch das zweite Dämpfungsmittel gedämpft werden, um so das Geräusch wirksam zu vermindern.

Ferner ist das erste Dämpfungsmittel derart ausgebildet, dass das akustisch weiche Gebiet, in dem der Schalldruck an der Kanalinnenwandfläche annähernd Null ist, und das akustisch nicht weiche Gebiet, in dem der Schalldruck an der Kanalinnenwandfläche nicht Null ist, abwechselnd über mehr als annähernd eine halbe Wellenlänge einer Schallwelle angeordnet sind, um diese Schallwelle in Längsrichtung des Kanals zu dämpfen. Das zweite Dämpfungsmittel bildet das schallabsorbierende Gebiet, das den Schalldruck einer zu dämpfenden Schallwelle auf der Innenwandfläche vermindert, und daher kann die Schallwelle des exklusiven Frequenzbands, die den Hauptbestandteil des Geräusches bildet, mit dem ersten Dämpfungsmittel gedämpft werden, und gleichzeitig kann auch die Schallwelle des ausgedehnteren Frequenzbands, das nicht mit dem ersten Dämpfungsmittel gedämpft wird, durch das zweite Dämpfungsmittel gedämpft werden, um so das Geräusch wirksam zu vermindern. Genauer gesagt kann in dem ersten Dämpfungsmittel der Bereich, der von dem akustisch weichen Gebiet besetzt wird, das in bestimmter Weise aufgebaut sein muss, mit einem Schalldruck, der Null ist, vermindert werden, wodurch sich der Kanalbereich, in dem sich der Kanalschalldämpfer der vorliegenden Erfindung befindet, vergrößert.

Ferner wird das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist, und deshalb ist es möglich, Geräusche verschiedener Wellenlängen zu dämpfen, wobei die Länge des akustischen Rohrs entsprechend der Wellenlänge des zu dämpfenden Geräusches geändert wird.

Ferner ist der Kanal durch Trennwände derart unterteilt, dass eine Vielzahl von kleinen Kanälen mit rechteckförmigem Querschnitt derart gebildet werden, dass eine Öffnungsweite eine halbe Wellenlänge oder weniger einer zu dämpfenden Schallwelle beträgt, ein erstes Dämpfungsmittel auf dem einen Paar aus Innenwandflächen von zwei Paaren sich gegenüberliegender Innenwandflächen eines kleinen Kanals befestigt ist und ein zweites Dämpfungsmittel, das eine von der des ersten Dämpfungsmittels unterschiedliche Dämpfungseigenschaft aufweist, auf dem anderen Paar aus Innenwandflächen befestigt ist. Daher können die Schallwellen in unterschiedlichen Frequenzbändern mit dem ersten Dämpfungsmittel und mit dem zweiten Dämpfungsmittel gedämpft werden, wodurch das Frequenzband, das gedämpft werden kann, ausgedehnt wird.

Ferner bildet das erste Dämpfungsmittel das akustisch weiche Gebiet, in dem der Schalldruck an der Kanalinnenwandfläche annähernd Null ist, über mehr als annähernd eine halbe Wellenlänge einer Schallwelle oder mehr, um diese Schallwelle in Längsrichtung des Kanals zu dämpfen. Das zweite Dämpfungsmittel bildet das schallabsorbierende Gebiet, das den Schalldruck einer zu dämpfenden Schallwelle auf der Innenwandfläche vermindert, und deshalb kann die Schallwelle des exklusiven Frequenzbands, die den Hauptbestandteil des Geräusches bildet, mit dem ersten Dämpfungsmittel gedämpft werden, und gleichzeitig kann auch die Schallwelle des ausgedehnteren Frequenzbands, das nicht mit dem ersten Dämpfungsmittel gedämpft wird, durch das zweite Dämpfungsmittel gedämpft werden, um so das Geräusch wirksam zu vermindern.

Ferner ist das erste Dämpfungsmittel derart ausgebildet, dass das akustisch weiche Gebiet, in dem der Schalldruck an der Kanalinnenwandfläche annähernd Null ist, und das akustisch nicht weiche Gebiet, in dem der Schalldruck an der Kanalinnenwandfläche nicht Null ist, abwechselnd über mehr als annähernd eine halbe Wellenlänge einer Schallwelle angeordnet sind, um diese Schallwelle in Längsrichtung des Kanals zu dämpfen. Das zweite Dämpfungsmittel bildet das schallabsorbierende Gebiet, das den Schalldruck einer zu dämpfenden Schallwelle auf der Innenwandfläche vermindert, und daher kann die Schallwelle des exklusiven Frequenzbands, die den Hauptbestandteil des Geräusches bildet, mit dem ersten Dämpfungsmittel gedämpft werden, und gleichzeitig kann auch die Schallwelle des ausgedehnteren Frequenzbands, das nicht mit dem ersten Dämpfungsmittel gedämpft wird, durch das zweite Dämpfungsmittel gedämpft werden, um so das Geräusch wirksam zu vermindern. Genauer gesagt kann in dem ersten Dämpfungsmittel der Bereich, der vom akustisch weichen Gebiet besetzt wird, das auf bestimmte Weise aufgebaut sein muss, mit einem Schalldruck, der Null ist, vermindert werden, wodurch sich der Kanalbereich, in dem der Kanalschalldämpfer befestigt werden kann, vergrößert.

Ferner wird das akustisch weiche Gebiet durch ein akustisches Rohr mit einer Länge gebildet, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist, und deshalb ist es möglich, Geräusche verschiedener Wellenlängen zu dämpfen, indem die Länge des akustischen Rohrs entsprechend der Wellenlänge des zu dämpfenden Geräusches geändert wird.

Ferner ist das akustisch weiche Gebiet dadurch gebildet, dass das offene Rohrende auf der einen Wandfläche der Trennwand angeordnet ist, und das akustisch nicht weiche Gebiet ist dadurch gebildet, dass das geschlossene Rohrende auf der anderen Wandfläche der Trennwand angeordnet ist, und deshalb kann es ausreichend sein, die Dicke der Trennwand auf die Länge eines akustischen Rohrs zu setzen, wobei die Trennwand dünn ausgebildet sein kann. Demzufolge kann, auch wenn der Kanal durch die Trennwände unterteilt ist, ein Kanalbereich, den die Trennwände im Querschnitt besetzen, so viel wie möglich vermindert werden, und daher kann der Kanal wirksam verwendet werden.

Ferner ist es möglich, wenn die Folien an dem offenen Rohrende des akustischen Rohrs angebracht sind, die Verkleinerung und die Minderung des Gewichts des Schalldämpfers zu erreichen, und gleichzeitig ist es auch möglich, die Schallwelle in einem viel breiteren Frequenzband zu dämpfen.

## Patentansprüche

1. Schalldämpfer für einen Kanal,
**dadurch gekennzeichnet,**
**dass** auf einer Fläche der Kanalinnenwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet sind, um diese Schallwelle in Längsrichtung des Kanals zu dämpfen.

2. Schalldämpfer für einen Kanal,
**dadurch gekennzeichnet,**
**dass** der Kanal durch Trennwände derart unterteilt ist, dass eine Öffnungsweite eine halbe Wellenlänge oder weniger einer zu dämpfenden Schallwelle beträgt, und dass auf beiden Seitenflächen der Trennwand ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle angeordnet sind, um diese Schallwelle in Längsrichtung des Kanals zu dämpfen.

3. Schalldämpfer nach Anspruch 1 oder 2,
**dadurch gekennzeichnet,**
**dass** das akustisch weiche Gebiet durch ein akustisches Rohr mit einer Länge gebildet wird, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist.

4. Schalldämpfer nach Anspruch 3,
**dadurch gekennzeichnet,**
**dass** das akustische Rohr an seinem offenen Ende durch eine Folie verschlossen ist.

5. Schalldämpfer nach Anspruch 3 oder 4,
**dadurch gekennzeichnet,**
**dass** das akustisch weiche Gebiet **dadurch** gebildet ist, dass das offene Rohrende auf der einen Wandfläche der Trennwand angeordnet ist, und dass das akustisch nicht weiche Gebiet **dadurch** gebildet ist, dass das geschlossene Rohrende auf der anderen Wandfläche der Trennwand angeordnet ist.

6. Schalldämpfer nach einem der Ansprüche 1 bis 5,
**dadurch gekennzeichnet,**
**dass** das akustisch nicht weiche Gebiet durch ein schallabsorbierendes Glied gebildet ist, das den Schalldruck vermindert.

7. Schalldämpfer für einen Kanal,
**dadurch gekennzeichnet,**
**dass** ein erstes Dämpfungsmittel auf dem einen Paar aus Innenwandflächen von zwei Paaren sich gegenüberliegender Innenwandflächen eines Kanals mit rechteckförmigen Querschnitt befestigt ist, dass ein zweites Dämpfungsmittel, das eine von der des ersten Dämpfungsmittels unterschiedliche Dämpfungseigenschaft aufweist, auf dem anderen Paar aus Innenwandflächen befestigt ist und dass das erste Dämpfungsmittel derart ausgebildet ist, dass ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle oder mehr angeordnet sind, um diese Schallwelle in Längsrichtung des Kanals zu dämpfen.

8. Schalldämpfer für einen Kanal,
**dadurch gekennzeichnet, dass** der Kanal durch Trennwände derart unterteilt ist, dass eine Vielzahl von kleinen Kanälen mit rechteckförmigem Querschnitt derart gebildet werden, dass eine Öffnungsweite eine halbe Wellenlänge oder weniger einer zu dämpfenden Schallwelle beträgt, dass ein erstes Dämpfungsmittel auf dem einen Paar aus Innenwandflächen von zwei Paaren sich gegenüberliegender Innenwandflächen eines kleinen Kanals befestigt ist, dass ein zweites Dämpfungsmittel, das eine von der des ersten Dämpfungsmittels unterschiedliche Dämpfungseigenschaft aufweist, auf dem anderen Paar aus Innenwandflächen befestigt ist und dass das erste Dämpfungsmittel derart ausgebildet ist, dass ein akustisch weiches Gebiet, in dem der Schalldruck an der Kanalinnenwandfläche annähernd Null ist, und ein akustisch nicht weiches Gebiet, in dem der Schalldruck an der Kanalinnenwandfläche nicht Null ist, abwechselnd über mehr als annähernd eine halbe Wellenlänge einer Schallwelle oder mehr angeordnet sind, um diese Schallwelle in Längsrichtung des Kanals zu dämpfen.

9. Schalldämpfer nach Anspruch 7 oder 8,
**dadurch gekennzeichnet,**
**dass** das akustisch weiche Gebiet durch ein akustisches Rohr mit einer Länge gebildet wird, die sich von einem an einer Wandfläche angeordneten, offenen Rohrende zu einem geschlossenen Rohrende erstreckt, das auf einem Viertel der Wellenlänge einer zu dämpfenden Schallwelle gesetzt ist.

10. Schalldämpfer nach Anspruch 9,
**dadurch gekennzeichnet,**
**dass** das akustische Rohr an seinem offenen Ende durch eine Folie verschlossen ist.

11. Schalldämpfer nach Anspruch 9 oder 10,
**dadurch gekennzeichnet,**
**dass** das akustisch weiche Gebiet **dadurch** gebildet ist, dass das offene Rohrende auf der einen Wandfläche der Trennwand angeordnet ist, und dass das akustisch nicht weiche Gebiet **dadurch** gebildet ist, dass das geschlossene Rohrende auf der anderen Wandfläche der Trennwand angeordnet ist.

12. Schalldämpfer nach einem der Ansprüche 7 bis 11,
**dadurch gekennzeichnet,**
**dass** das zweite Dämpfungsmittel derart ausgebildet ist, dass ein schallabsorbierendes Gebiet, das den Schalldruck einer zu dämpfenden Schallwelle vermindert, auf der Innenwandfläche gebildet ist.
